# EUROPEAN PATENT SPECIFICATION

(11) **EP 2 031 278 B1**
(45) Date of publication and mention of the grant of the patent: **23.05.2018**
(21) Application number: 08252882.9
(22) Date of filing: 29.08.2008
(51) Int. Cl.: F16H 57/02, F02B 61/02, B62M 7/02

(54) **Engine and straddle type vehicle**
Motor und im Grätschsitz zu führendes Fahrzeug
Moteur et véhicule de type chariot cavalier

(30) Priority: 31.08.2007 JP 2007227087; 03.12.2007 JP 2007312910
(43) Date of publication of application: 04.03.2009
(73) Proprietor: Yamaha Hatsudoki Kabushiki Kaisha, Shizuoka-ken Shizuoka 438-8501 (JP)
(72) Inventor: Nakayama, Yoshiharu, Iwata-shi Shizuoka-ken 438-8501 (JP)
(74) Representative: Moreland, David

(56) References cited:
- EP-A2- 1 178 193
- US-A- 5 186 078

## Description

### FIELD OF THE INVENTION

The present invention relates to an engine and a vehicle such as a straddle-type vehicle. More particularly the present invention relates to an engine with enhanced rigidity and a vehicle including the engine.

### BACKGROUND OF THE INVENTION

It is well known with engine units for motorcycles that the engine unit includes a crankcase which can be split on a splitting plane passing through an axis of a crankshaft, a rear case having a bracket in a rear part thereof, and a belt type transmission system having an input V pulley and an output V pulley, for example, as disclosed in JP-A-2002-46682. In such an engine unit, a shape from the crankcase to the bracket in a plan view is a general L-shape. A bearing boss of a transmission unit and a bearing boss of a bevel unit are coaxially fitted in and fixed to a fitting hole of the bracket. Further, a counter shaft parallel with the crankshaft is pivotally supported by a contacting surface between the crankcase and the rear case. This enhances rigidity of the assembled engine unit.

However, the structure of the engine unit is complicated in order to enhance the rigidity in the above conventional technology.

The present invention is made in consideration of such a problem, and an object of at least one embodiment is to provide an engine in which rigidity of an engine unit including a crankcase that can be split on a splitting plane passing through an axis of a crankshaft is enhanced in spite of a simple structure, and a straddle type vehicle including the engine.

Document EP 1 178 193 A2 is considered to be the closest prior art and discloses all the features of the preamble of claim 1.

### SUMMARY OF THE INVENTION

Various aspects of the present invention are defined in the independent claims. Some preferred features are defined in the dependent claims.

An engine in accordance with an embodiment of the present invention has a transmission having a driving pulley shaft and a driven pulley shaft; a crankcase which houses a crankshaft and can be split into at least two parts along a splitting plane passing through an axis of the crankshaft; and a transmission case housing the driving pulley shaft and the driven pulley shaft. The transmission case may have a unitary member including a support for the driving pulley shaft and a support for the driven pulley shaft. One part of the crankcase is coupled to one section of the member of the transmission case, and the other part of the crankcase is coupled to another section of the member of the transmission case. Such a construction can provide an engine in which rigidity of an engine unit including a split crankcase is enhanced in spite of a simple structure.

A straddle type vehicle in accordance with an embodiment of the present invention includes an engine as recited above. Such a construction can provide a straddle type vehicle including an engine in which rigidity of an engine unit having a split crankcase is enhanced. Straddle type vehicles include motorcycles (including scooters), four-wheeled buggies, snowmobiles, etc.

### BRIEF DESCRIPTION OF THE DRAWINGS

An engine and a straddle type vehicle in accordance with an embodiment of the present invention will be described hereinafter with reference to drawings.
FIG. 1 is an example of a left side view of a motorcycle in accordance with an embodiment of the present invention.
FIG. 2 is an example of a left side view of an engine case in accordance with the embodiment of the present invention.
FIG. 3 is an example of a right side view of the engine case in accordance with the embodiment of the present invention.
FIG. 4 is another example of a right side view of the engine case in accordance with the embodiment of the present invention.
FIG. 5 is a cross-sectional view of the engine taken along line V-V shown in FIG. 2.
FIG. 6 is a cross-sectional view of the engine taken along line VI-VI shown in FIGs. 2 through 4.
FIG. 7 is a cross-sectional view of the engine taken along line VII-VII shown in FIG. 4.
FIG. 8 is an explanatory view for depicting the relationship between relative positions of shafts in a left side view of the engine in accordance with the embodiment of the present invention.
FIG. 9 is an example of a plan view of the motorcycle in accordance with the embodiment of the present invention.
FIG. 10 is another example of a left side view of the engine case in accordance with the embodiment of the present invention.
FIG. 11 is another example of a right side view of the engine case in accordance with the embodiment of the present invention.
FIG. 12 is an example of a rear view of the engine case in accordance with the embodiment of the present invention.
FIG. 13 is an example of the bottom view of the engine case in accordance with the embodiment of the present invention.
FIG. 14 is a cross-sectional view taken along a splitting plane of a crankcase of the engine in accordance with the embodiment of the present invention.
FIG. 15 is a cross-sectional view taken along line XV-XV shown in FIG. 14.

### DETAILED DESCRIPTION OF THE DRAWINGS

In this embodiment, the engine in accordance with the present invention is a water-cooled four-cycle straight three-cylinder engine. The straddle type vehicle in accordance with the present invention is a scooter type motorcycle. In this embodiment, front, rear, left, right, above, and below are front, rear, left, right, above, and below, respectively, in the view of a rider driving the motorcycle. The right-and-left direction may be referred to as a vehicle width direction.

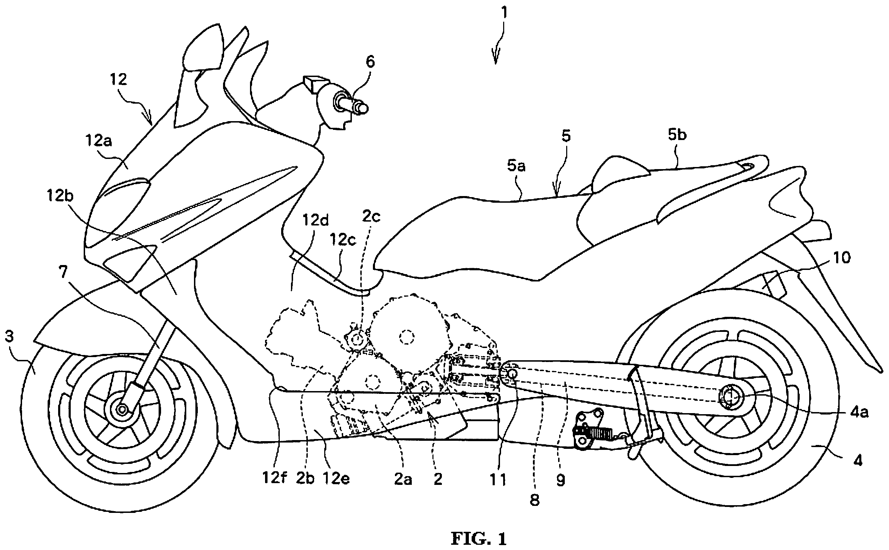

First, the motorcycle will be described. FIG. 1 is a left side view of a motorcycle 1. As shown in FIG. 1, the motorcycle 1 includes a front wheel 3 and a rear wheel 4 rotatably supported by a vehicle body, a seat 5 on which a rider is seated, handlebars 6 for steering the front wheel 3, and an engine 2 generating driving force for driving the rear wheel 4.

The seat 5 extends to a position above the rear wheel 4 from a middle position between the front wheel 3 and the rear wheel 4. The seat 5 is a tandem seat having a front seat part 5a on which a rider is seated in a front part thereof and having a rear seat part 5b on which a passenger is seated above the rear wheel. A rider seated on the seat 5 can steer the front wheel 3 rotatably supported at lower ends of a pair of a left and a right front forks 7 via the handlebars 6.

The engine 2 is fixed to a vehicle body frame (not shown) constructing a framework of a vehicle body of the motorcycle 1. The engine 2 has a cylinder block 2b housing pistons (not shown). The cylinder block 2b extends upward from a vicinity below the front seat part 5a of the seat 5 while being inclined forward. The engine 2 will be described later in detail.

The motorcycle 1 includes a shaft-drive type driving force transmission device 8 for transmitting driving force of the engine 2 to the rear wheel 4. That is, the motorcycle 1 has a drive shaft 9 extending from the engine 2 to the rear wheel in the fore-and-aft direction on the left side of the vehicle body.

The drive shaft 9 is supported swingably in the vertical direction around a pivot shaft 11 extending in the vehicle width direction. A bevel gear formed at a rear end of the drive shaft 9 is engaged with a bevel gear formed at a left end of the rear wheel rotating shaft 4a pivotally supporting the rear wheel 4 in a rotatable manner. The rear wheel 4 is supported swingably in the vertical direction around the pivot shaft 11.

The motorcycle 1 includes a vehicle body cover 12 for covering the vehicle body. The vehicle body cover 12 includes a front cowling 12a formed to cover a front part of the vehicle body above the front wheel 3, a leg shield 12b formed to cover front sides of both legs of a rider seated on the front seat part 5a of the seat 5, a center cover 12c formed to cover an upper part of the vehicle body in a position between the handlebars 6 and the seat 5, a side cover 12d formed to cover right and left sides of the vehicle body (that is, the outsides in the vehicle width direction) below the center cover 12c, and a pair of right and left foot boards 12e formed to have a pair of right and left flat surfaces 12f on which a rider seated on the front seat part 5a of the seat 5 places his/her right and left feet in parts below the side cover 12d.

The center cover 12c extends forward from a position below a front end of the seat 5 while being inclined upward. The inclination of the center cover 12c generally corresponds with the inclination of the cylinder block 2b of the engine 2 disposed below the center cover 12c.

The engine 2 can be started by a starter motor 2c in starting traveling of the motorcycle 1. Air and fuel are supplied from an intake port (not shown) to the cylinder block 2b of the started engine 2 by the fuel injection method. Fuel is combusted in the cylinder block 2b, and thereby the engine 2 generates driving force. The driving force is transmitted to the rear wheel 4 via the drive shaft 9. As a result, the rear wheel 4 rotates, and the motorcycle 1 travels forward. Exhaust gas of the engine 2 discharged from an exhaust port (not shown) of the cylinder block 2b is discharged to the atmosphere from the muffler 10.

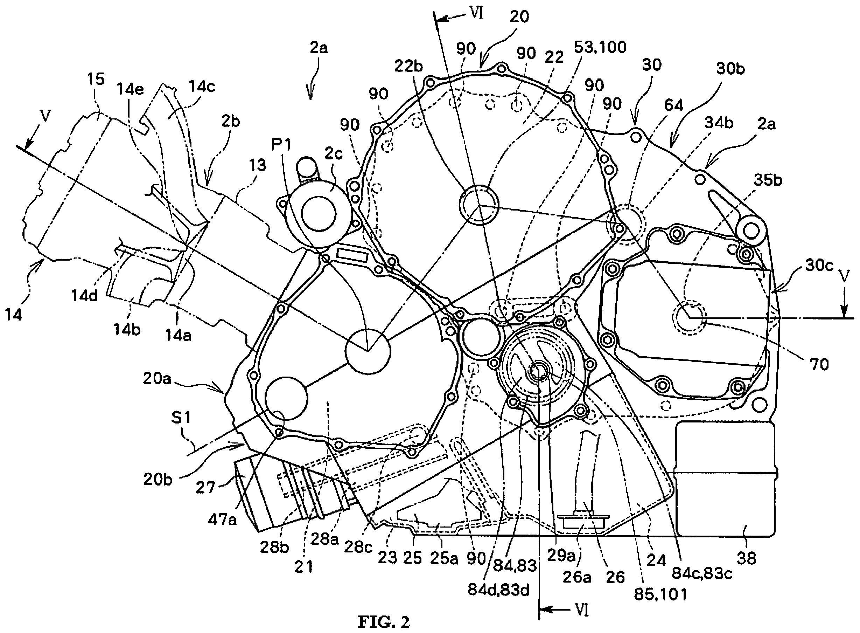

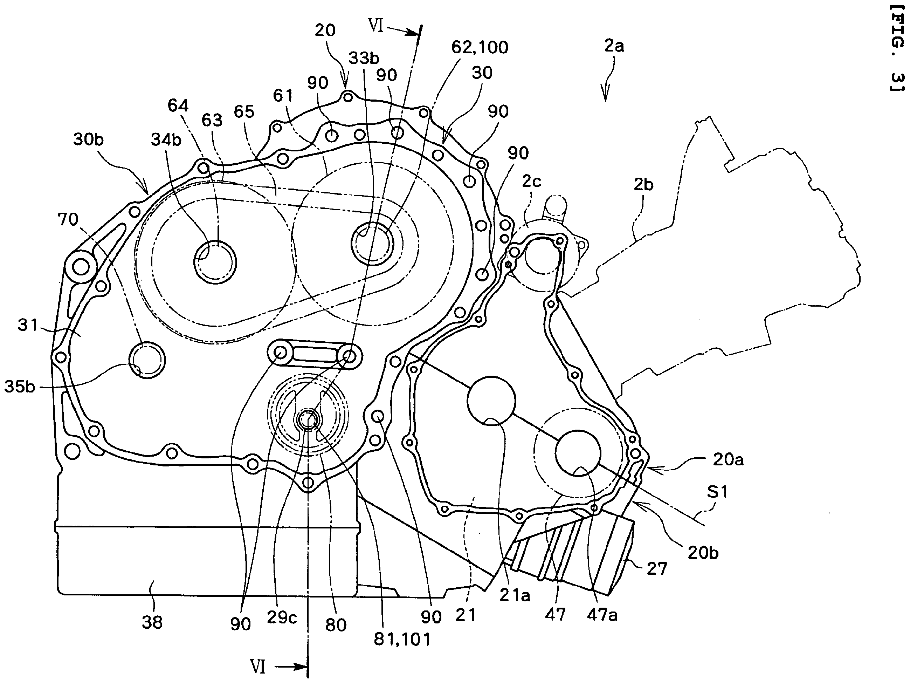

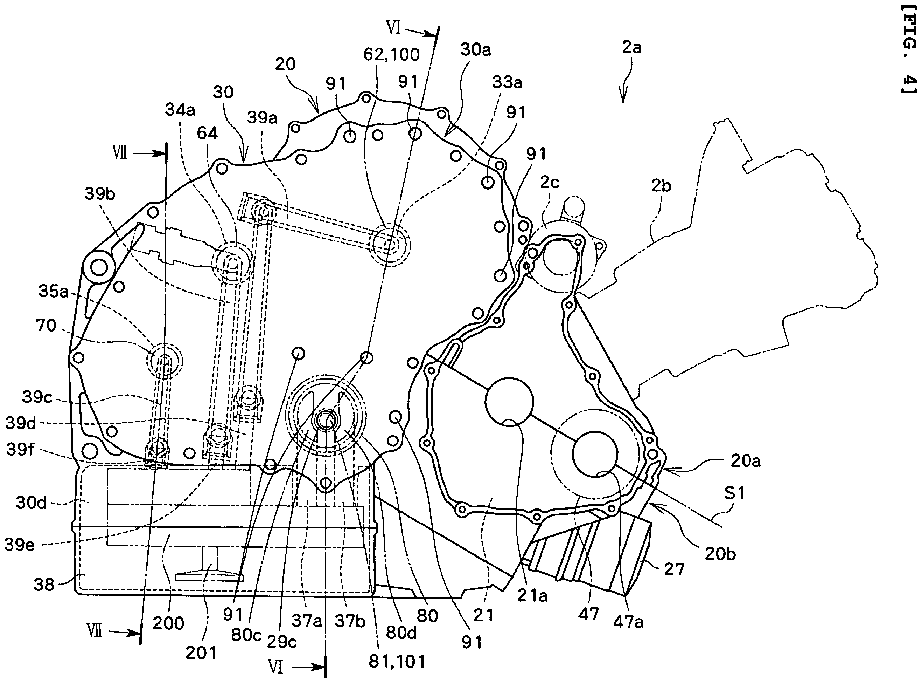

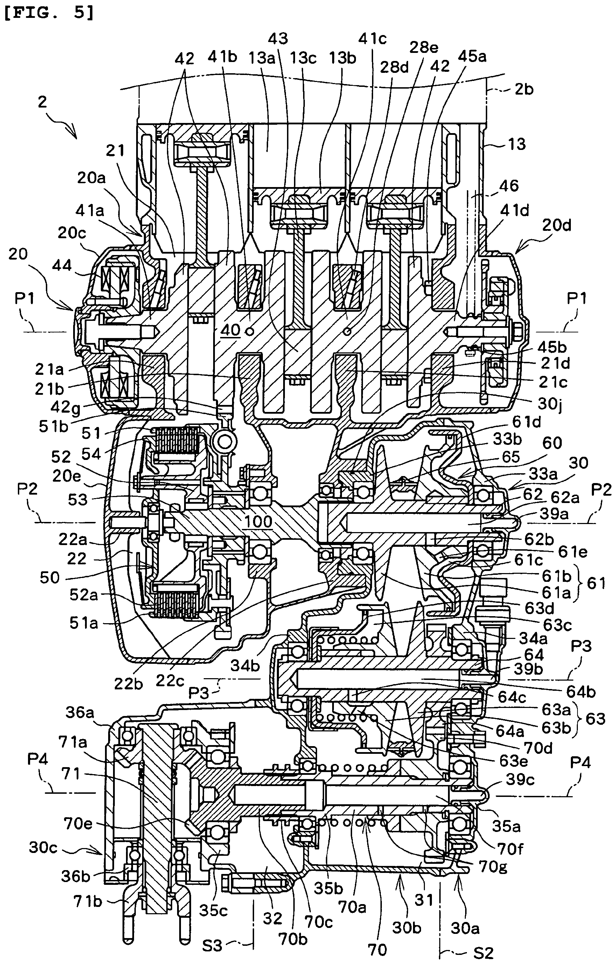

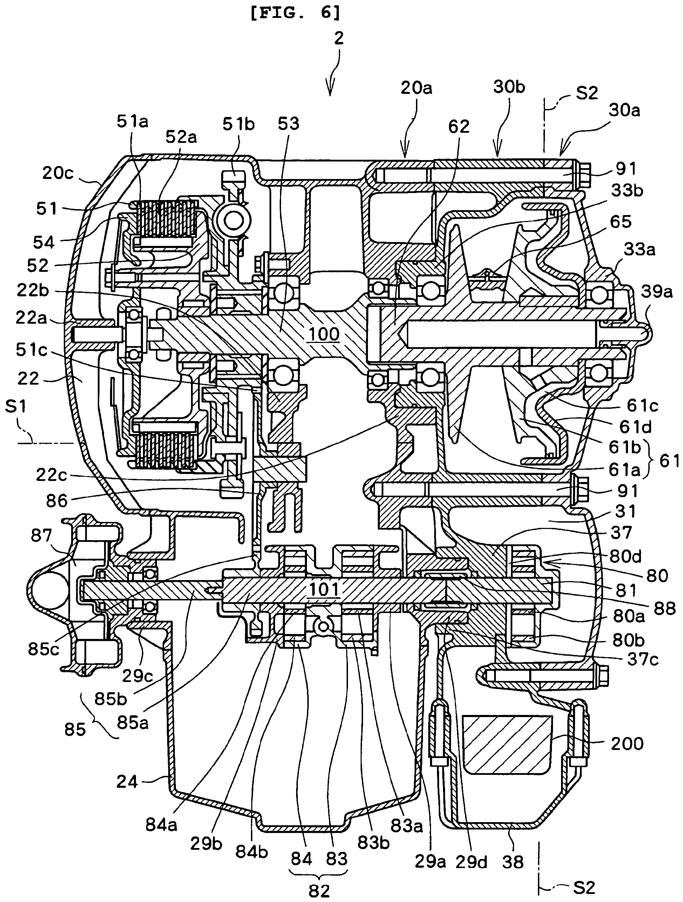

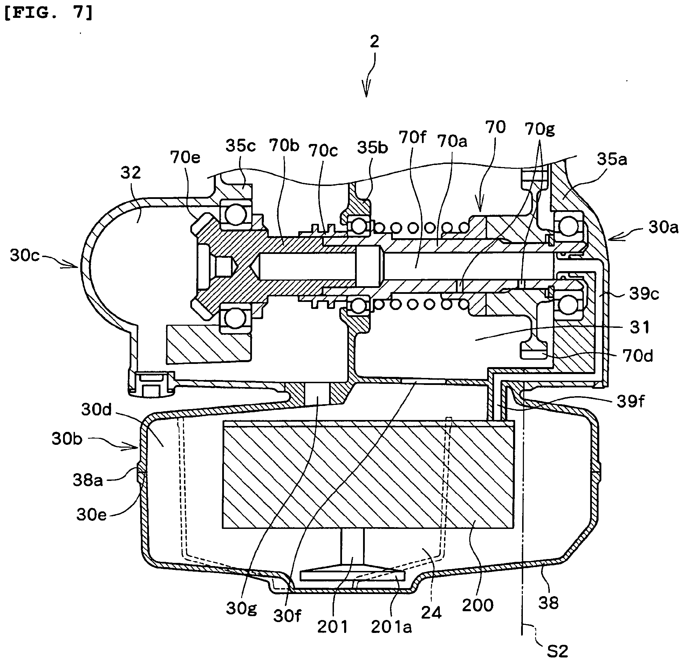

The engine 2 will now be described in detail. First, a first aspect of the engine 2 in accordance with the present embodiment will be described with reference to FIGs. 2 through 7. FIG. 2 is a left side view of an engine case 2a constructing an outer covering of the engine 2. FIGs. 3 and 4 are right side views of the engine case 2a. FIGs. 2 and 3 shows the engine case 2a in a state that a cover for partially covering an outside part in the vehicle width direction is removed. FIG.5 is a cross-sectional view of the engine 2 taken along line V-V shown in FIG. 2. FIG. 6 is a cross-sectional view of the engine 2 taken along lines VI-VI in FIGs. 2 through 4. FIG. 7 is a cross-sectional view of the engine 2 taken along line VII-VII shown in FIG. 4.

The engine case 2a has a crankcase 20 for housing a crankshaft 40 and a transmission case 30 for housing a transmission or speed changer 60. As shown in FIG. 5, the speed changer 60 is a wet type continuously variable transmission having a driving pulley 61, a driving pulley shaft 62 for driving the driving pulley, a driven pulley 63, a driven pulley shaft 64 for driving the driven pulley, and an endless-shaped metal belt 65 wound around the driving pulley 61 and the driven pulley 63.

As shown in FIGs. 2 through 4, the crankcase 20 is constructed to be capable of being split in the vertical direction on a splitting plane S1 passing along an axis P1 of the crankshaft 40. That is, the crankcase 20 has an upper case 20a constructing a part higher than the splitting plane S1 (that is, a part including the cylinder block 2b) and a lower case 20b constructing a part lower than the splitting plane S1 as two case parts separately formed, which can be separated from each other in the vertical direction. A mating surface at a lower end of the upper case 20a and a mating surface at an upper end of the lower case 20b are joined together on the splitting plane S1, and thereby the crankcase 20 is constructed.

As shown in FIGs. 5 through 7, the transmission case 30 is constructed to be capable of being split in the right-and-left direction on splitting planes S2 and S3 perpendicular to the axis P1 of the crankshaft 40. That is, the transmission case 30 has a right case 30a constructing a part further right of the right splitting plane S2 and covering a right side (outside in the vehicle width direction) of the speed changer 60, a left case 30b constructing a part between the splitting planes S2 and S3 and covering a left side (inside in the vehicle width direction) of the transmission or speed changer 60, and a left end case 30c constructing a part further left of the splitting plane S3 and covering a left side of a part of the left case 30b as three case parts separately formed, which can be split from each other in the right-and-left direction. A mating surface at a left end of the right case 30a and a mating surface at a right end of the left case 30b are joined together on the splitting plane S2. A mating surface at a left end of the part of the left case 30b and a mating surface at a right end of the left end case 30c are joined together on the splitting plane S3. Thereby, the transmission case 30 is constructed.

Further, each of the upper case 20a and the lower case 20b of the crankcase 20 is coupled to different sections of the transmission case 30. Thereby, the crankcase 20 and the transmission case 30 are unitarily formed, and the engine case 2a is constructed.

That is, as shown in FIG.2, rear parts of the upper case 20a and the lower case 20b and a front part of the transmission case 30 are disposed in positions that they overlap with each other in the vehicle width direction. The upper case 20a and an overlapping part of the transmission case 30 are fastened and fixed together in the vehicle width direction. The lower case 20b and another overlapping part of the transmission case 30 are also fastened and fixed together in the vehicle width direction.

Specifically, as shown in FIGs. 2 and 5, front parts of the left case 30b and the right case 30a are disposed across the rear of both the crankcase parts 20a, 20b, on a right side of a crankcase element (clutch chamber 22).

As shown in FIGs. 2 and 3, a plurality of fastening bolt holes 90 are formed in parts corresponding to each of the rear parts of the upper case 20a and the lower case 20b, the front part of the left case 30b, and the front part of the right case 30a (see FIG. 4), which are juxtaposed in the vehicle width direction. Further, as shown in FIGs. 4 and 6, a bolt member 91 extending across the three case members in the vehicle width direction is inserted in each of the plurality of fastening bolt holes 90.

That is, the three case parts that are the upper case 20a, the left case 30b, and the right case 30a are fastened and fixed together in the vehicle width direction by the plurality of bolt members 91. Also, the three case parts that are the lower case 20b, the left case 30b, and the right case 30a are fastened and fixed together in the vehicle width direction by the plurality of bolt members 91.

The left case 30b, the right case 30a, and each of the upper case 20a and the lower case 20b are unitarily combined together in such a manner, and thereby rigidity of the engine case 2a, in particular, of the crankcase 20 is enhanced.

As shown in FIGs. 2 through 5, the crank chamber 21 extending in the vehicle width direction is formed in a front part of the crankcase 20 in such an engine case 2a. The crankshaft 40 is housed in the crank chamber 21.

The cylinder block 2b described above extends upward above the crank chamber 21 while being inclined forward. The cylinder block 2b has a cylinder 13 having three cylinder chambers 13a linearly formed therein in the vehicle width direction for housing three pistons 13b as shown in FIG. 5, a cylinder head 14 having three combustion chambers 14a formed therein for compressing fuel in positions corresponding to the three cylinder chambers 13a and combusting the fuel and a cover 15 for blocking an upper end of the cylinder head 14 as shown in FIG. 2.

As shown in FIG. 2, the cylinder head 14 has intake ports 14b and exhaust port 14c formed therein, of which one ends open on sides of the cylinder head 14 and the other ends open in the combustion chamber 14a corresponding to each of the three combustion chambers 14a. The cylinder head 14 houses intake valves 14d for opening or closing the openings of respective intake ports 14b to the combustion chambers 14a, and exhaust valves 14e for opening or closing the openings of the respective exhaust ports 14c to the combustion chambers 14a. A double overhead camshaft (DOHC) is applied to the engine 2 as an operating mechanism of the intake valve 14d and the exhaust valve 14e.

As shown in FIG. 5, the crankshaft 40 housed in the crank chamber 21 of the crankcase 20 has four journals 41a through 41d formed into columns extending in the vehicle width direction so that their axes correspond with the axis P1 of the crankshaft 40, six crank webs 42 making three pairs that are formed into plates extending in a direction perpendicular to the axis P1, and three crank pins 43 extending in the vehicle width direction to connect the two crank webs 42 making a pair in positions off the axis P1. The journals 41a through 41d, crank webs 42, and crank pins 43 are unitarily formed.

The three pairs of crank webs 42 are formed in positions corresponding to the three cylinder chambers 13a formed in the cylinder 13. A lower end of a columnar connecting rod 13c supporting the piston 13b from a lower side thereof is connected to each of the three crank pins 43.

The crankshaft 40 is supported by the crankcase 20 to rotate around the axis P1 corresponding to reciprocal movements of the three pistons 13b connected together via the connecting rod 13c in the cylinder chambers 13a.

That is, as shown in FIG. 5, a pivot support 21a for pivotally supporting the journal 41a constructing a left end part of the crankshaft 40 is formed in a left wall blocking a left side of the crank chamber 21. A pivot support 21d for pivotally supporting the journal 41d constructing a right end part of the crankshaft 40 is formed in a right wall blocking a right side of the crank chamber 21. Further, a pivot support 21b for pivotally supporting the journal 41b extending between the left end pair of crank webs 42 and the central pair of crank webs 42, and a pivot support 21c for pivotally supporting the journal 41c extending between the central pair of crank webs 42 and the right end pair of crank webs 42 are individually formed in the crank chamber 21. The journals 41a through 41d of the crankshaft 40 are formed into thin cylinders and pivotally supported by the pivot support 21a through 21d by plain bearings (not shown) disposed to cover outer peripheries of the journals 41a through 41d.

The left end part of the crankshaft 40 extends to the left of the crank chamber 21. A generator 44 for generating electric power corresponding to rotations of the crankshaft 40 is put on a tip of the left end part. The generator 44 has a rotor having magnets and unitarily rotating with the crankshaft 40 and stator coils disposed to face the magnets. The rotor rotates while being linked with the crankshaft 40, and thereby the generator 44 can generate electric power. Electric power generated by the generator 44 is supplied to a battery (not shown) included in the motorcycle 1 (see FIG. 1), for example. A cover member 20c for covering an outside of the generator 44 in the vehicle width direction is removably mounted on a left side of the crank chamber 21.

A gear engaging with a gear (not shown) on an outer periphery of a balancer 47 (see FIGs. 2 through 4) disposed below the crankshaft 40 is formed between the crank web 42 at a right end of the crankshaft 40 and the pivot support 21d for pivotally supporting the journal 41d at the right end. The balancer 47 is rotatably supported by the crankcase 20 by a shaft (not shown) extending in the vehicle width direction. That is, a pivot support 47a for pivotally supporting the shaft for driving the balancer 47 is formed in the crankcase 20. The balancer 47 is disposed in front of and slightly below the crankshaft 40 so that an axis thereof is positioned on the splitting plane S1 of the crankcase 20.

As shown in FIG. 5, a right end part of the crankshaft 40 extends out to the right of the crank chamber 21. A gear 45b is formed at a tip of the right end part. A chain 46 for operating the intake valves 14d and the exhaust valves 14e (see FIG. 2) in the cylinder head 14 shown in FIG. 2 to open or close in the DOHC manner is wound around the gear 45b. A cover member 20d for covering an outside of the right end part of the crankshaft 40 in the vehicle width direction is removably mounted on the right side of the crank chamber 21.

As shown in FIG. 5, the engine 2 includes a clutch 50 which can connect or disconnect transmission of driving force from the crankshaft 40 to the driving pulley shaft 62 of the speed changer 60. The clutch 50 is housed in the crankcase 20.

That is, the clutch chamber 22 for housing the clutch 50 in parallel with the crank chamber 21 is formed in the crankcase 20. The clutch chamber 22 is formed in a manner such that a left part of the crank chamber 21 protrudes rearward. A left wall blocking a left side of the clutch chamber 22 is formed as a removable cover member 20e.

In this embodiment, the clutch 50 is a multiple-disc clutch. The clutch 50 has a clutch upstream part 51 rotating while being constantly linked with the crankshaft 40, a clutch downstream part 52 connectable with the clutch upstream part 51, a clutch shaft 53 unitarily rotating with the clutch downstream part 52, and a pressing plate 54 for controlling connection and disconnection between the clutch upstream part 51 and the clutch downstream part 52.

A gear 51b is formed on an outer periphery of the clutch upstream part 51. The gear 51b is engaged with a gear 42g formed on an outer periphery of the right crank web 42 between the pair of crank webs 42 at the left end of the crankshaft 40. Therefore, the clutch upstream part 51 rotates while being constantly linked with the crankshaft 40 while the crankshaft 40 rotates.

The clutch upstream part 51 has a plurality of upstream discs 51a disposed at prescribed intervals in the vehicle width direction and a gear 51b disposed on a right side of the plurality of the upstream discs 51a. The clutch downstream part 52 has a plurality of downstream discs 52a disposed at prescribed intervals in the vehicle width direction. The upstream discs 51a and the downstream discs 52a mutually overlap in the vehicle width direction, and are alternately disposed. The pressing plate 54 disposed on a left side of the upstream discs 51a and the downstream discs 52a is urged to the right by a spring which is not shown, and presses the upstream discs 51a and the downstream discs 52a in a manner such that they contact with each other. As a result, the clutch upstream part 51 and the clutch downstream part 52 are connected. In a state that the clutch upstream part 51 and the clutch downstream part 52 are connected (referred to as "connection state" hereinafter), the clutch upstream part 51, the clutch downstream part 52, and the clutch shaft 53 unitarily rotate, and rotational driving force of the crankshaft 40 is transmitted to the clutch shaft 53.

On the other hand, the connection between the upstream discs 51a and the downstream discs 52a can be released by moving the pressing plate 54 to the left by operating a rod (not shown) connected to the pressing plate 54. As described above, in a state that the connection between the clutch upstream part 51 and the clutch downstream part 52 is released (referred to as "disconnection state" hereinafter), only the clutch upstream part 51 rotates, and thus rotational driving force of the crankshaft 40 is not transmitted to the clutch shaft 53. The rod described above for switching the clutch 50 between the connection state and the disconnection state can be operated by a rider of the motorcycle 1 with a clutch lever (not shown) provided on the handlebars 6 (see FIG. 1) or an actuator (not shown) included in the motorcycle 1, for example. The actuator can be operated with oil pressure or a motor based on, for example, an electrical instruction input by a rider via an instruction inputting means (a pressable button, etc.) (not shown) included in the motorcycle 1 and an electrical instruction output by an engine control unit (ECU) (not shown) included in the motorcycle 1 based on an engine speed of the engine 2, etc. The clutch 50 may be a centrifugal clutch switching between the connection state and the disconnection state corresponding to centrifugal force generated with rotations of the clutch upstream part 51.

As shown in FIGs. 2 and 5, the clutch shaft 53 is separately formed from the crankshaft 40, and disposed in parallel with the crankshaft 40 in a position adjacent to the crankshaft 40. The clutch shaft 53 is disposed in the rear of the crankshaft 40 and above the crankshaft 40 and the splitting plane S1 of the crankcase 20.

The clutch shaft 53 is rotatably supported by the crankcase 20. That is, as shown in FIG. 5, a left clutch pivot support 22a for pivotally supporting a left end of the clutch 53 is formed on the left wall of the clutch chamber 22. A midway clutch pivot support 22b for pivotally supporting a midway part of the clutch shaft 53 is formed on a right wall of the clutch chamber 22. Further, a right clutch pivot support 22c is formed on a right side of the clutch chamber 22 in a manner such that a part of a rear wall of the crank chamber 21 extends out further rearward and pivotally support a right end part of the clutch shaft 53. Each of the left clutch pivot support 22a, the midway clutch pivot support 22b, and the right clutch pivot support 22c is formed on the upper case 20a (see FIG. 2). The clutch shaft 53 is pivotally supported at each of the pivot supports 22a through 22c by a ball bearing.

As shown in FIG. 2, a crankcase oil pan 23 for storing lubricating oil is formed in a part of a bottom of the crankcase 20 below the crank chamber 21. Lubricating oil flows down from the crank chamber 21 and the clutch chamber 22 in the crankcase 20 into the crankcase oil pan 23 by gravity. An oil tank 24 for storing lubricating oil transported from the crankcase oil pan 23 is formed in another part of the bottom of the crankcase 20 (a part in the rear of the crankcase oil pan 23) adjacent to the crankcase oil pan 23 below the clutch chamber 22.

As shown in FIGs. 2 and 6, the engine 2 includes a crankcase oil pump 82 for supplying lubricating oil to a prime mover part which is the crankshaft 40, the cylinder block 2b, etc. (the clutch 50 (see FIG. 5) and parts disposed upstream thereof in a path of driving force transmission in the engine 2) . The crankcase oil pump 82 is housed in the crankcase 20, positioned between the clutch 50 and the driving pulley 61 in the vehicle width direction (see FIG. 6), and disposed below the clutch 50 and the driving pulley 61 in a side view (see FIG. 2).

The crankcase oil pump 82 has a scavenging pump 83 for transporting lubricating oil in the crankcase oil pan 23 to the oil tank 24 and a feed pump 84 for pressure-feeding lubricating oil in the oil tank 24 to each part of the engine 2. The scavenging pump 83 and the feed pump 84 are unitarily constructed, and supported between a pair of right pump support 29a and left pump support 29b which are parts of crankcase 20. In this embodiment, both the scavenging pump 83 and the feed pump 84 are trochoid pumps, and have pairs of inner rotor 83a and 84a and outer rotor 83b and 84b, respectively.

As shown in FIG. 2, an upper end of a strainer 25 for inducting lubricating oil from the crankcase oil pan 23 to the scavenging pump 83 is connected to the scavenging pump 83. An induction part 25a for inducting lubricating oil in the crankcase oil pan 23 is formed at a lower end of the strainer 25. An oil passage (not shown) for making lubricating oil discharged from the scavenging pump 83 flow into the oil tank 24 is formed between the scavenging pump 83 and the upper end of the oil tank 24.

As shown in FIG. 2, an upper end of a strainer 26 for inducting lubricating oil from the oil tank 24 into the feed pump 84 is connected to the feed pump 84. An induction part 26a for inducting lubricating oil in the oil tank 24 is formed at a lower end of the strainer 26. An oil passage 28a for making lubricating oil discharged from the feed pump 84 flow into an oil filter 27 is formed between the feed pump 84 and the oil filter 27 formed on a front part of the crankcase 20.

Further, as shown in FIG. 2, a main oil passage (main gallery) 28c extending in the vehicle width direction is formed in a lower part of the crank chamber 21 in the crankcase 20. Also, an oil passage 28b is formed between the main oil passage 28c and the oil filter 27. Lubricating oil sent from the oil tank 24 to the oil filter 27 by the feed pump 84 is filtered by an element part (not shown) included in the oil filter 27, and thereafter flows into the main oil passage 28c via the oil passage 28b extending rearward from the oil filter 27. As shown in FIG. 5, lubricating oil flowed into the main oil passage 28c is supplied to the crank chamber 21 and the cylinder block 2b from oil injection passages 28d formed in the pivot supports 21a through 21d for pivotally supporting the respective journals 41a through 41d of the crankshaft 40, and oil passages 28e formed in the journals 41a through 41d.

As shown in FIG. 6, the engine 2 includes a crankcase oil pump shaft 85a for operating the crankcase oil pump 82 and a coolant pump shaft 85b for operating a coolant pump 87 for circulating coolant in the engine 2 in the crankcase 20. The inner rotors 83a and 84a of the scavenging pump 83 and the feed pump 84 are joined to an outer periphery of the crankcase oil pump shaft 85a, and unitarily rotate with the crankcase oil pump shaft 85a. The coolant pump 87 is put on a left end of the coolant pump shaft 85b. The crankcase oil pump shaft 85a and the coolant pump shaft 85b are formed separately from each other, and coaxially coupled together. That is, a left end of the crankcase oil pump shaft 85a and a right end of the coolant pump shaft 85b have a protrusion and a groove, respectively, formed into shapes corresponding to each other. The protrusion is fit in the groove, and thereby the left end of the crankcase oil pump shaft 85a and the right end of the coolant pump shaft 85b are coupled together. As a result, the crankcase oil pump shaft 85a and the coolant pump shaft 85b have their axes corresponding with each other, thereby construct the crankcase pump shaft 85, and unitarily rotate.

The crankcase pump shaft 85 is formed separately from the crankshaft 40 (see FIG. 5) and the clutch shaft 53, and disposed in parallel with the clutch shaft 53 in a position adjacent to the clutch shaft 53. The crankcase pump shaft 85 is disposed rearward of the crankshaft 40 and below the driving pulley shaft 62 and the driven pulley shaft 64.

The crankcase pump shaft 85 is rotatably supported by the crankcase 20. That is, as shown in FIG. 6, a crankcase pump left pivot support 29c for pivotally supporting a left end part of the crankcase pump shaft 85 is formed on a left wall blocking a left side of the crankcase oil pump 82 in the crankcase 20. A midway part of the crankcase pump shaft 85 is pivotally supported by the right pump support 29a and the left pump support 29b of the crankcase 20 via the crankcase oil pump 82. Further, a crankcase pump right insertion part 29d in which a right end part of the crankcase pump shaft 85 is inserted is formed on a right wall blocking a right side of the crankcase oil pump 82 in the crankcase 20.

A middle gear 86 rotatably supported by the crankcase 20 is disposed between the crankcase pump shaft 85 and the clutch shaft 53. A gear 51c engaging with the middle gear 86 is formed on the outer periphery of the clutch upstream part 51 in the clutch 50. A gear 85c engaging with the middle gear 86 is put on an outer periphery of the crankcase pump shaft 85. That is, the clutch upstream part 51 and the crankcase pump shaft 85 are coupled together via the middle gear 86.

Therefore, the crankcase pump shaft 85 rotates while being linked with the crankshaft 40 regardless of whether driving force transmission is disconnected in the clutch 50 or not. Accordingly, the crankcase pump 82 mounted on the crankcase pump shaft 85 can retain operation in the connection state of the clutch 50, of course, and also in the disconnection state of the clutch 50. Therefore, the crankcase oil pump 82 can supply lubricating oil to the crank chamber 21 and the cylinder block 2b via the oil passages 28a through 28e described above while the crankshaft 40 rotates.

Further, the coolant pump 87 driven by rotation of the crankcase pump shaft 85 can retain operation in the disconnection state of the clutch 50, and circulate coolant through each part of the engine 2.

Meanwhile, as shown in FIG. 5, the transmission case 30 houses the transmission or speed changer 60. That is, a transmission or speed changer chamber 31 extending in the fore-and-aft direction is formed between the left case 30b and the right case 30a in the transmission case 30. The speed changer 60 is housed in the speed changer chamber 31. A front part of the speed changer chamber 31 is disposed on the right side of the clutch chamber 22 of the crankcase 20. A rear part of the speed changer chamber 31 extends to a part in the rear of the crankcase 20.

The driving pulley 61 and the driving pulley shaft 62 are housed in the front part of the speed changer chamber 31. The driving pulley shaft 62 is formed separately from the crankshaft 40 and the clutch shaft 53, and disposed in parallel with the crankshaft 40 in a position adjacent to the crankshaft 40.

The driving pulley shaft 62 is rotatably supported by the transmission case 30. That is, a driving pulley right pivot support 33a for pivotally supporting a right end of the driving pulley shaft 62 is formed in the right case 30a blocking a right side of the speed changer chamber 31. A driving pulley left pivot support 33b for pivotally supporting a left end part of the driving pulley shaft 62 is formed in the left case 30b blocking a left side of the speed changer chamber 31. As shown in FIGs. 3 and 4, both the driving pulley right pivot support 33a and the driving pulley left pivot support 33b are formed above the splitting plane S1 of the crankcase 20 in the speed changer chamber 30.

The driving pulley shaft 62 is coaxially coupled with the clutch shaft 53. That is, as shown in FIGs. 5 and 6, a right end of the clutch shaft 53 and a left end of the driving pulley shaft 62 are combined together by spline-combining. As a result, the clutch shaft 53 and the driving pulley shaft 62 have their axes corresponding with each other, thereby construct a single shaft (referred to as "combined main shaft 100" hereinafter) extending from the crankcase 20 to the transmission case 30 in the vehicle width direction, and unitarily rotate.

That is, as shown in FIGs. 5 and 6, the combined main shaft 100 is formed separately from the crankshaft 40, and disposed in parallel with the crankshaft 40 in a position adjacent to the crankshaft 40. A left end of the combined main shaft 100 is pivotally supported by the left clutch pivot support 22a of the crankcase 20. A right end of the combined main shaft 100 is pivotally supported by the driving pulley right pivot support 33a of the transmission case 30. Further, a midway part of the combined main shaft 100 is pivotally supported by the right clutch pivot support 22c of the crankcase 20 and the driving pulley left pivot support 33b of the transmission case 30. As shown in FIGs. 2 through 4, the combined main shaft 100 is disposed in the rear of the crankshaft 40 and above the crankshaft 40 and the splitting plane S1 of the crankcase 20.

As shown in FIGs. 5 and 6, the right clutch pivot support 22c for pivotally supporting the right end of the clutch shaft 53 and the driving pulley left pivot support 33b for pivotally supporting the left end of the driving pulley shaft 62 are formed into shapes corresponding to each other and fit together. That is, a cylindrical protrusion extending out to the right from the crankcase 20 around the right end part of the clutch shaft 53 is formed in the clutch right pivot support 22c. On the other hand, a cylindrical protrusion extending out to the left from the left case 30b around a left end part of the driving pulley shaft 53 is formed in the driving pulley left pivot support 33b. An inner diameter of the cylinder of the right clutch pivot support 22c is generally equal to an outer diameter of the cylinder of the driving pulley left pivot support 33b. The cylinder of the driving pulley left pivot support 33b is fit in the cylinder of the right clutch pivot support 22c. An O-ring 30j is placed between an inner surface of the cylinder of the right clutch pivot support 22c and an outer surface of the cylinder of the driving pulley left pivot support 33b for a sealing purpose.

The driving pulley shaft 62 and the clutch shaft 53 are coupled together in a part in which the right clutch pivot support 22c and the driving pulley left pivot support 33b are fit together. That is, the part in the combined main shaft 100 in which the driving pulley shaft 62 and the clutch shaft 53 are coupled together is inserted in the part in which the right clutch pivot support 22c and the driving pulley left pivot support 33b are fit together.

Combining between the transmission case 30 and each of the upper case 20a and the lower case 20b is made across parts above and below the splitting plane S1 of the crankcase 20 mainly around the combined main shaft 100. That is, as shown in FIGs. 2 and 3, the plurality of fastening bolt holes 90 described above are formed in parts around the clutch shaft 53 in the upper case 20a, parts around the clutch shaft 53 in the lower case 20b, and parts around the driving pulley shaft 62 in the right case 30a and the left case 30b. As shown in FIGs. 4 and 6, the three case members, which are the left case 30b, the right case 30a, and each of the upper case 20a and the lower case 20b, are fastened and fixed together in the vehicle width direction around the combined main shaft 100 by each of the bolt members 91.

As shown in FIGs. 5 and 6, the driving pulley 61 is formed around the outer periphery of the driving pulley shaft 62. The driving pulley 61 has a driving-side fixed sheave 61a disposed inside in the vehicle width direction and a driving-side movable sheave 61b formed outside in the vehicle width direction. The driving-side fixed sheave 61a is unitarily formed on the driving pulley shaft 62. The driving-side movable sheave 61b is formed separately from the driving pulley shaft 62. The driving pulley shaft 62 is inserted in a center part thereof. The driving-side movable sheave 61b is slidable on the outer periphery of the driving pulley shaft 62 in a direction along an axis P2 of the driving pulley shaft 62. A distance between the driving-side movable sheave 61b and the driving-side fixed sheave 61a changes corresponding to the axial position of the driving-side movable sheave 61b. As a result, a diameter of a part covered by the metal belt 65 (referred to as "effective diameter" hereinafter) changes.

The axial position of the driving-side movable sheave 61b is controlled with oil pressure. That is, a driving-side lid 61d is mounted on a right side of the driving-side movable sheave 61b in a manner such that a closed space for containing oil for hydraulic control (referred to as "driving-side oil containing part 61c" hereinafter) is formed between the driving-side lid 61d and the driving-side movable sheave 61b. When an amount of oil contained in the driving-side oil containing part 61c increases, the driving-side movable sheave 61b moves to the left, the distance from the driving-side fixed sheave 61a decreases, and the effective diameter of the driving pulley 61 increases. Conversely, when the amount of oil contained in the driving-side oil containing part 61c decreases, the driving-side movable sheave 61b moves to the right, the distance from the driving-side fixed sheave 61a increases, and the effective diameter of the driving pulley 61 decreases.

As shown in FIG. 5, the driven pulley 63 and the driven pulley shaft 64 are housed in a part in the speed changer chamber 31 in the rear of the driving pulley 61 and the driving pulley shaft 62. The driven pulley 64 is formed separately from the crankshaft 40 and the clutch shaft 53, and disposed in parallel with the driving pulley shaft 62 in a position adjacent to the driving pulley shaft 62.

The driven pulley shaft 64 is rotatably supported by the transmission case 30. That is, a driven pulley right pivot support 34a for pivotally supporting a right end of the driven pulley shaft 64 is formed in the right case 30a. A driven pulley left pivot support 34b for pivotally supporting a left end part of the driven pulley shaft 64 is formed in the left case 30b.

As described above, the right case 30a is unitarily formed while including the driving pulley right pivot support 33a for pivotally supporting the right end of the driving pulley shaft 62 and the driven pulley right pivot support 34a for pivotally supporting the right end of the driven pulley shaft 64 (see FIGs. 4 and 5). The left case 30b is unitarily formed while including the driving pulley left pivot support 33b for pivotally supporting the left end of the driving pulley shaft 62 and the driven pulley left pivot support 34b for pivotally supporting the left end of the driven pulley shaft 64 (see FIGs. 3 and 5). That is, the driving pulley right pivot support 33a and the driven pulley right pivot support 34a are unitarily formed in the right case 30a. The driving pulley left pivot support 33b and the driven pulley left pivot support 34b are unitarily formed in the left case 30b.

As shown in FIG. 5, the driven pulley 63 is formed around an outer periphery of the driven pulley shaft 64. The driven pulley 63 has a driven-side fixed sheave 63a disposed outside in the vehicle width direction and a driven-side movable sheave 63b formed inside in the vehicle width direction. The driven-side fixed sheave 63a is unitarily formed on the driven pulley shaft 64. On the other hand, the driven-side movable sheave 63b is formed separately from the driven pulley shaft 64. The driven pulley shaft 64 is inserted in a center part thereof. The driven-side movable sheave 63b is slidable on the outer periphery of the driven pulley shaft 64 in a direction along an axis P3 of the driven pulley shaft 64. A distance between the driven-side movable sheave 63b and the driven-side fixed sheave 63a changes corresponding to the axial position of the driven-side movable sheave 63b. As a result, an effective diameter of the driven pulley 63 changes.

A driven-side lid 63d is mounted on a left side of the driven-side movable sheave 63b in a manner such that a closed space for containing oil for hydraulic control (referred to as "driven-side oil containing part 63c" hereinafter) is formed between the driven-side lid 63c and the driven-side movable sheave 63b. A coil spring for urging the driven-side movable sheave 63b toward the driven-side fixed sheave 63a is housed in the driven-side oil containing part 63c. When the effective diameter of the driving pulley 61 increases, the driven-side movable pulley 63b slides toward the driven-side fixed sheave 63a against the urging force of the coil spring since a length of the metal belt 65 wound around the driving pulley 61 and the driven pulley 63 is fixed. Thus, the effective diameter of the driven pulley 63 decreases. Conversely, the effective diameter of the driven pulley 63 increases when the effective diameter of the driving pulley 61 decreases.

As shown in FIG. 5, the engine 2 includes an output shaft 70 for outputting driving force transmitted from the crankshaft 40 to the driven pulley shaft 64 to further downstream parts. The output shaft 70 is formed separately from the driven pulley shaft 64, and disposed in parallel with the driven pulley shaft 64 in a position adjacent to the driven pulley shaft 64.

As shown in FIGs. 2 through 5, a whole of the output shaft 70 is disposed outside the crankcase 20. That is, the whole of the output shaft 70 is housed in the transmission case 30 to the rear of the crankcase 20. Specifically, an output chamber 32 is formed between the left case 30b and the left end case 30c in the transmission case 30. A left part of the output shaft 70 is housed in the output chamber 32. A right part of the output shaft 70 is housed in the speed changer chamber 31.

An output shaft right part 70a which is the right part housed in the speed changer chamber 31 and an output shaft left part 70b which is the left part housed in the output chamber 32 are coaxially coupled together, and thereby the output shaft 70 is constructed. That is, as shown in FIG. 5, a left end of the output shaft right part 70a and a right end of the output shaft left part 70b are formed into cylinders corresponding to each other and fit together.

The output shaft right part 70a and the output shaft left part 70b are coupled removably in the right-and-left direction. That is, an engagement groove in a prescribed length extending across the output shaft right part 70a and the output shaft left part 70b in the vehicle width direction is formed on a coupling part in which the output shaft right part 70a and the output shaft left part 70b are coupled together. Meanwhile, a cylindrical engaging member 70c extending across the output shaft right part 70a and the output shaft 70b in the vehicle width direction and engaging in the engagement groove is put on an outer periphery of the coupling part. A rod which is not shown is mounted on a protrusion formed on the outer periphery of the engaging member 70c. The engaging member 70c is slidable on an outer periphery of the output shaft 70 along an axis P4 of the output shaft 70 by operating the rod. That is, the engaging member 70c is disposed across the output shaft right part 70a and the output shaft left part 70b in a coupled state shown in FIG. 5. However, for example, a rider of the motorcycle 1 operates the rod described above and slides the engaging member 70c further to the left of the output shaft right part 70a, and thereby the engaging member 70c can be disposed only on the outer periphery of the output shaft left part 70b. As a result, the coupling between the output shaft right part 70a and the output shaft left part 70b is released, and they can be separated. The output shaft left part 70b can rotate independently of the output shaft right part 70a in the separated state.

The output shaft 70 is rotatably supported by the transmission case 30. That is, an output shaft right pivot support 35a for pivotally supporting a right end of the output shaft 70 (which is a right end of the output shaft right part 70a) is formed in the right case 30a. An output shaft left pivot support 35c for pivotally supporting a left end part of the output shaft 70 (which is a left end part of the output shaft left part 70b) is formed in the output chamber 32 of the left end case 30c. An output shaft midway pivot support 35b for pivotally supporting a midway part of the output shaft 70 (which is the coupling part between the output shaft right part 70a and the output shaft left part 70b) is formed in the left case 30b. That is, the output shaft right part 70a and the output shaft left part 70b are coupled together in a pass-through hole formed in the output shaft midway pivot support 35b which is a boundary between the speed changer chamber 31 and the output chamber 32.

A gear 70d is unitarily put on a right end part of the output shaft 70. The gear 70d is engaged with a gear 64a put on a right end part of the driven pulley shaft 64. Therefore, the output shaft 70 rotates while being linked with the driven pulley shaft 64.

As shown in FIG. 5, a connecting shaft 71 for connecting the output shaft 70 and the drive shaft 9 (see FIG. 1) together is housed in the output chamber 32. The connecting shaft 71 is formed to extend rearward from a left side of the output shaft 70.

A bevel gear 71a engaging with a bevel gear 70e formed on a left end of the output shaft 70 is put on a front end of the connecting shaft 71. Therefore, the connecting shaft 71 rotates while being linked with the output shaft 70. A universal joint 71b for rotatably connecting a front end of the drive shaft 9 is put on a rear end of the connecting shaft 71.

The connecting shaft 71 is pivotally supported by the transmission case 30 in a rotatable manner. That is, a connecting shaft front pivot support 36a for pivotally supporting a front end part of the connecting shaft 71 is formed in a front part in the output chamber 32 of the left end case 30c. A connecting shaft rear pivot support 36b for pivotally supporting a rear end part of the connecting shaft 71 is formed in a rear part in the output chamber 32.

As shown in FIG. 6, the engine 2 includes a speed changer oil pump 80 for supplying oil to the speed changer 60. The speed changer oil pump 80 is housed in the speed changer chamber 31 of the transmission case 30. That is, as shown in FIGs. 3 and 4, the speed changer oil pump 80 is disposed adjacently to the driving pulley 61 and the driven pulley 63 and below the driving pulley 61 and the driven pulley 63 in the speed changer chamber 31.

As shown in FIG. 6, the speed changer oil pump 80 is a trochoid pump and has an inner rotor 80a and an outer rotor 80b. The speed changer oil pump 80 is supported by a speed changer pump support 37 which is a part of the left case 30b of the transmission case 30.

The engine 2 includes a speed changer pump shaft 81 for operating the speed changer oil pump 80. The inner rotor 80a of the speed changer oil pump 80 is joined to an outer periphery of a right end of the speed changer pump shaft 81, and unitarily rotates with the speed changer pump shaft 81.

The speed changer pump shaft 81 is formed separately from the crankshaft 40, the clutch shaft 53, the driving pulley shaft 62, and the driven pulley shaft 64, and disposed in parallel with the driving pulley shaft 62 and the driven pulley shaft 64 in a position adjacent to the driving pulley shaft 62 and the driven pulley shaft 64. As shown in FIGs. 3 and 4, the speed changer pump shaft 81 is disposed in the rear of the crankshaft 40, in front of the output shaft 70, and below the driving pulley shaft 62 and the driven pulley shaft 64. That is, the speed changer pump shaft 81 is disposed in a position surrounded by the crankshaft 40, the driving pulley shaft 62, the driven pulley shaft 64, and the output shaft 70, and below the splitting plane S1 of the crankcase 20.

The speed changer pump shaft 81 is rotatably supported by the transmission case 30. That is, as shown in FIG. 6, the speed changer pump shaft 81 is pivotally supported by the speed changer pump support 37 of the left case 30b via the speed changer oil pump 80. A speed changer pump insertion part 37c, in which a left end of the speed changer pump shaft 81 is located, is formed in a part in the left case 30b, blocking a left side of the speed changer oil pump 80.

The speed changer pump shaft 81 is coaxially coupled with the crankcase pump shaft 85. In other words, as shown in FIG. 6, the left end of the speed changer pump shaft 81 is combined with a right end of the crankcase pump shaft 85. That is, an engagement groove in a prescribed length extending across the speed changer pump shaft 81 and the crankcase pump shaft 85 in the vehicle width direction is formed in a coupling part in which the speed changer pump shaft 81 and the crankcase pump shaft 85 are coupled together. A cylindrical engaging member 88 extending across the speed changer pump shaft 81 and the crankcase pump shaft 85 in the vehicle width direction and engaging in the engagement groove is put on an outer periphery of the coupling part. As a result, the crankcase pump shaft 85 and the speed changer pump shaft 81 have their axes corresponding with each other, thereby forming a shaft extending from the crankcase 20 to the transmission case 30 in the vehicle width direction (referred to as "combined pump shaft 101" hereinafter), and unitarily rotate.

The combined pump shaft 101 is formed separately from the crankshaft 40 and the combined main shaft 100, and disposed in parallel with the combined main shaft 100 in a position adjacent to the combined main shaft 100. A left end of the combined pump shaft 101 is pivotally supported by the crankcase pump left pivot support 29c of the crankcase 20. A midway part of the combined pump shaft 101 is pivotally supported by the right pump support 29a and the left pump support 29b of the crankcase 20 via the crankcase oil pump 82. Further, a right end of the combined pump shaft 101 is pivotally supported by the speed changer pump support 37 of the transmission case 30 via the speed changer oil pump 80.

The combined pump shaft 101 rotates while being linked with the crankshaft 40 independently of the connection or disconnection of driving force transmission in the clutch 50. Therefore, a speed changer pump shaft 81 mounted on the right end of the combined pump shaft 101 can retain operation in both the connection state of the clutch 50 and also in the disconnection state of the clutch 50. Accordingly, the speed changer oil pump 80 can supply oil for hydraulic control and lubricating oil to the speed changer 60 while the crankshaft 40 rotates.

The crankcase pump right insertion part 29d, which accommodates the right end of the crankcase pump shaft 85 and the speed changer pump insertion part 37c, which accommodates the left end of the speed changer pump shaft 81, are formed in shapes corresponding to each other and fit together. That is, a cylindrical protrusion extending out to the right from the crankcase 20 around the crankcase pump shaft 85 is formed in the crankcase pump right insertion part 29d. On the other hand, a cylindrical protrusion extending out to the left from the left case 30b around the speed changer pump shaft 81 is formed in the speed changer pump insertion part 37c. An outer diameter of the cylinder of the crankcase pump right insertion part 29d is generally equal to an inner diameter of the cylinder of the speed changer pump insertion part 37c. The cylinder of the crankcase pump right insertion part 29d fits into the cylinder of the speed changer pump insertion part 37c.

The crankcase pump shaft 85 and the speed changer pump shaft 81 are coupled together in a fitting part in which the crankcase pump right insertion part 29d and the speed changer pump insertion part 37c are fitted together. A coupling part in the combined pump shaft 101 in which the crankcase pump shaft 85 and the speed changer pump shaft 81 are coupled together is inserted in the fitting part in which the crankcase pump right insertion part 29d and the speed changer pump insertion part 37c are fitted together.

The coupling between the lower case 20b and the transmission case 30 is formed around the combined pump shaft 101. As shown in FIGs. 2 and 3, the plurality of fastening bolt holes 90 as described above are formed in each of a part around the crankcase pump shaft 85 in the lower case 20b and a part around the speed changer pump shaft 81 in the right case 30a and the left case 30b. As shown in FIGs. 4 and 6, the three case members, that is the lower case 20b, the left case 30b, and the right case 30a, are fastened and fixed together in the vehicle width direction around a combined oil shaft 101 by each of the plurality of bolt members 91.

As shown in FIGs. 2 through 4, 6, and 7, a speed changer oil pan 38 for storing oil supplied to the speed changer 60 by the speed changer oil pump 80 is formed in the transmission case 30. As shown in FIG. 7, the speed changer oil pan 38 is provided to block an opening 30d formed at a lower end of the left case 30b, thus closing the transmission case 30 from a lower side thereof. That is, the opening 30d of the left case 30b unitarily forming part of the transmission case 30 is blocked by the speed changer oil pan 38 unitarily provided therein.

Therefore, a seal on a connection part between a mating surface 30e around the opening 30d at the lower end of the left case 30b and a mating surface 38a at an upper end of the speed changer oil pan 38 can be certainly and easily achieved. A pass-through hole 30f is formed on a part of a wall partitioning the speed changer chamber 31 from the opening 30d in the left case 30b. A pass-through hole 30g is formed on a part of a wall partitioning the output chamber 32 from the opening 30d. As a result, lubricating oil supplied into the speed changer chamber 31 flows down from the pass-through hole 30f to the speed changer oil pan 38. Lubricating oil supplied into the output chamber 32 flows down from the pass-through hole 30g to the speed changer oil pan 38.

As shown in FIGs. 3, 4, and 6, the speed changer oil pan 38 extends rearward from a part below the speed changer oil pump 80 to a rear end of the left case 30b on a right side of the crankcase oil pan 23 and the oil tank 24 of the crankcase 20. Further, as shown in FIGs. 2 and 7, a rear end part of the speed changer oil pan 38 extends to the left in the rear of the oil tank 24 below the output shaft 70. As described above, the oil pan 38 is formed to extend out while curving around from the right side of the crankcase oil pan 23 and the oil tank 24 to the rear side of these, and obtains a sufficient oil capacity.

As shown in FIGs. 4, 6, and 7, a control unit 200 for controlling oil supply to the speed changer 60 and the output shaft 70 is disposed in the speed changer oil pan 38. Meanwhile, as shown in FIG. 4, an induction passage 37a for inducting oil into the speed changer oil pump 80 and discharge passage 37b for discharging oil from the speed changer oil pump 80 are formed in the speed changer pump support 37. One end of the induction passage 37a is connected to the induction opening 80c of the speed changer oil pump 80, and the other end is connected to the control unit 200. One end of the discharge passage 37b is connected to a discharge opening 80d of the speed changer oil pump 80, and the other end is connected to the control unit. As shown in FIGs. 4 and 7, a strainer 201 for inducting oil in the speed changer oil pan 38 into the control unit 200 extends out downward from the control unit 200. An induction part 201a disposed in a vicinity of a bottom surface of the speed changer oil pan 38 for inducting oil is formed in a lower end part of the strainer 201.

As shown in FIGs. 4, 5, and 7, the right case 30a has an oil passage 39a, an oil passage 39b, and an oil passage 39c formed therein independently from each other. One end of the oil passage 39a opens at a right end of the driving pulley right pivot support 33a, and the other end opens in a part of a left end surface of a lower part of the right case 30a (that is the mating surface disposed on the splitting plane S2). One end of the oil passage 39b opens at a right end of the driven pulley right pivot support 34a, and the other end opens in another part on the left end surface of the lower part of the right case 30a. One end of the oil passage 39c opens in the output shaft right pivot support 35a, and the other end opens in yet another part of the left end surface of the lower part of the right case 30a.

On the other hand, as shown in FIGs. 4 and 7, the left case 30b has three oil passages 39d through 39f formed therein independently from each other. Ends of the oil passages open in positions on a right end surface of the left case 30b (that is the mating surface disposed on the splitting plane S2) corresponding to the openings of the three oil passages 39a through 39c formed on the left end surface of the right case 30a, and the other ends are connected to the control unit 200. As described above, the transmission case 30 has the oil passages 39a through 39f formed therein. The oil passages 39a through 39f connect each of the driving pulley right pivot support 33a, the driven pulley right pivot support 34a, and the output shaft right pivot support 35a to the control unit 200 across the left case 30b and the right case 30a.

As shown in FIGs. 5 through 7, hollow parts 62a, 64b, and 70f extending along the axes P2, P3, and P4 and opening at the right ends are formed in the driving pulley shaft 62, the driven pulley shaft 64, and the output shaft 70, respectively. Oil passages 62b, 64c, and 70g extending outward in the radial direction from the hollow parts 62a, 64b, and 70f and opening on outer peripheral surfaces are formed in the driving pulley shaft 62, the driven pulley shaft 64, and the output shaft 70, respectively. Oil passages 61e and 63e for communicatively connecting the hollow parts 62a and 64b of the driving pulley shaft 62 and the driven pulley shaft 64 to the driving-side oil containing part 61c and the driven-side oil containing part 63c, respectively, are formed in the driving-side movable sheave 61b and the driven-side movable sheave 63b.

Therefore, oil for hydraulic control can be supplied to each of the driving-side oil containing part 61c and the driven-side oil containing part 63c by operating the speed changer oil pump 80. That is, when the speed changer pump shaft 81 rotates while being linked with the crankshaft 40 and the speed changer oil pump 80 operates, oil stored in the speed changer oil pan 38 flows into the control unit 200 via the strainer 201, and further is inducted into the speed changer oil pump 80 via the induction passage 37a (see FIG. 4). The inducted oil is discharged from the speed changer oil pump 80, flows into the control unit 200 via the discharge passage 37b (see FIG. 4), and further flows into the oil passages 39d through 39f formed in the left case 30b.

At this point, the control unit 200 can adjust opening or closing of a control valve (not shown) provided in each of connection parts to the oil passages 39d through 39f formed on the left case 30b independently of each other. That is, for example, in the case that the effective diameter of the driving pulley 61 is increased, the control unit 200 opens the control valve of the oil passage 39d communicatively connected to the driving pulley shaft 62, and closes the control valve of the oil passage 39e communicatively connected to the driven pulley shaft 64. As a result, oil flows from the control unit 200 through the oil passage 39d of the left case 30b and the oil passage 39a of the right case 30a, and is selectively pressure-fed to the driving-side oil containing part 61c of the driving pulley 61. Thereby, the driving-side movable sheave 61b (see FIGs. 5 and 6) slides to the left, and the effective diameter of the driving pulley 61 increases.

Oil stored in the speed changer oil pan 38 is used for both hydraulic control of the speed changer 60 and lubrication in the speed changer 60, the output shaft 70, and the connecting shaft 71. That is, in engine 2, one speed changer oil pump 80 supplies oil in the speed changer oil pan 38 to the speed changer 60 for hydraulic control as described above, and also supplies the oil in the speed changer oil pan 38 to the speed changer 60, the output shaft 70, and the connecting shaft 71 for lubrication. An oil passage (not shown) of which one end opens in the speed changer chamber 31 and the output chamber 32 is formed in the transmission case 30. Lubricating oil pressure-fed by the speed changer oil pump 80 can be supplied from the oil passage into the speed changer chamber 31 and the output chamber 32.

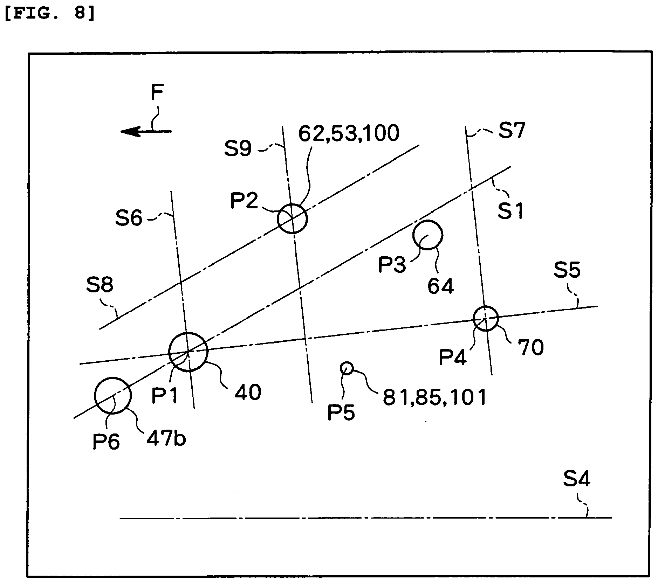

FIG. 8 is an explanatory view for depicting the relationship between relative positions of the shafts disposed in the engine case 2a in parallel with each other in a left side view of the engine 2. That is, FIG. 8 shows a shaft 47b of the balancer 47, the crankshaft 40, the driving pulley shaft 62, the driven pulley shaft 64, the output shaft 70, and the speed changer pump shaft 81. A direction indicated by an arrow F in FIG. 8 is the forward direction of the engine 2.

As described above, the driving pulley shaft 62 and the clutch shaft 53 are coaxially coupled together and form the combined main shaft 100 (see FIG. 5), and thus the clutch shaft 53 and the combined main shaft 100 are disposed in the same position in FIG. 8. The speed changer pump shaft 81 and the crankcase pump shaft 85 are coaxially coupled together and form the combined pump shaft 101 (see FIG. 6). Therefore, the crankcase pump shaft 85 and the combined pump shaft 101 are disposed in the same position as the speed changer pump shaft 81 in FIG. 8.

Further, FIG. 8 shows the splitting plane S1 of the crankcase passing along an axis P6 of the balancer shaft 47b and the axis P1 of the crankshaft 40, a plane (horizontal plane) S4 for indicating a horizontal direction in the case that the engine 2 is installed in the motorcycle 1, a plane S5 passing along the axis P1 of the crankshaft 40 and the P4 of the output shaft 70, a plane S6 perpendicular to the plane S5 passing along the axis P1 of the crankshaft 40, a plane S7 perpendicular to the plane S5 passing along the axis P4 of the output shaft 70, a plane S8 parallel with the splitting plane S1 of the crankcase 20 passing along the axis P2 of the driving pulley shaft 62, and a plane S9 perpendicular to the plane S5 passing along the axis P2 of the driving pulley shaft 62.

The horizontal plane S4 extends on prolongation of flat bottom surfaces of the crankcase oil pan 23, an oil tank 24, and the speed changer oil pan 38, for example, in the engine case 2a shown in FIG. 2. The horizontal plane S4 is also an end surface in the lowest position in the engine case 2a.

As described above, the engine 2 includes the crankshaft 40 driven by reciprocal movements of the pistons 13b housed in the cylinder block 2b (see FIG. 2), the driving pulley shaft 62 driven by rotation of the crankshaft 40, the driven pulley shaft 64 driven by rotation of the driving pulley shaft 62, the output shaft 70 driven by rotation of the driven pulley shaft 64, and the speed changer pump shaft 81 driven by rotation of the crankshaft 40. The crankshaft 40, the driving pulley shaft 62, the driven pulley shaft 64, the output shaft 70, and the speed changer pump shaft 81 are formed separately from each other, and disposed in parallel with each other.

As described above, the combined pump shaft 101 constructed with the speed changer pump shaft 81 and the crankcase pump shaft 85 is coupled with the clutch upstream part 51 via the middle gear 86 which is an idler gear. The combined pump shaft 101 may be coupled with a shaft provided upstream of the clutch 50 in the drive transmission via an idler gear.

The crankcase oil pump 82 for supplying oil to the crankcase 20 is mounted on the combined pump shaft 101 constructed with the speed changer pump shaft 81 and the crankcase pump shaft 85.

The driving pulley shaft 62 and the driven pulley shaft 64 are disposed between the crankshaft 40 and the output shaft 70, and above the plane S5. Specifically, each of the axis P2 of the driving pulley shaft 62 and the axis P3 of the driven pulley shaft 64 is positioned between the plane S6 and the plane S7, and above the plane S5.

The speed changer pump shaft 81 is disposed between the crankshaft 40 and the output shaft 70. Specifically, an axis P5 of the speed changer pump shaft 81 is positioned between the plane S6 and the plane S7.

Further, the speed changer pump shaft 81 is disposed closer to the plane S5 than the driving pulley shaft 62 and the driven pulley shaft 64. Specifically, the axis P5 of the speed changer pump shaft 81 is positioned below the plane S5.

The axis P5 of the speed changer pump shaft 81 may be positioned closer to, for example, the plane S5 than a plane (not shown) above the plane S5 and parallel with the plane S5 passing along either one positioned below between the axis P2 of the driving pulley shaft 62 and the axis P3 of the driven pulley shaft 64.

As described above, the speed changer pump shaft 81 is disposed in a position surrounded by the crankshaft 40, the driving pulley shaft 62, the driven pulley shaft 64, and the output shaft 70 in the side view of the engine 2 as shown in FIG. 8. Therefore, the engine 2 can be made compact not only in the width direction thereof but also in the fore-and-aft and vertical directions.

The driven pulley shaft 64 is disposed below the driving pulley shaft 62. Further, the axis P3 of the driven pulley shaft 64 is positioned below the plane S8.

The combined pump shaft 101 including the speed changer pump shaft 81 is disposed in the rear of the driving pulley shaft 62. Specifically, the axis P5 of the combined pump shaft 101 is positioned to the rear of the plane S9.

The combined main shaft 100 including the driving pulley shaft 62 is rotatably supported by the upper case 20a. That is, the axis P2 of the combined main shaft 100 is positioned above the splitting plane S1.

Further, the combined pump shaft 101 including the speed changer pump shaft 81 is rotatably supported by the lower case 20b. That is, the axis P5 of the combined pump shaft 101 is positioned below the splitting plane S1.

As described above, the engine 2 has two shafts for coupling the crankcase 20 and the transmission case 30 together, which are the combined main shaft 100 and the combined pump shaft 101. The combined main shaft 100 is pivotally supported in a manner such that the axis P2 thereof is positioned above the splitting plane S1. The combined pump shaft 101 is pivotally supported in a manner such that the axis P5 thereof is positioned below the splitting plane S1. Therefore, in addition to enhancement in rigidity of the engine 2a, lengths of the engine 2 particularly in the width and fore-and-aft directions can be effectively reduced.

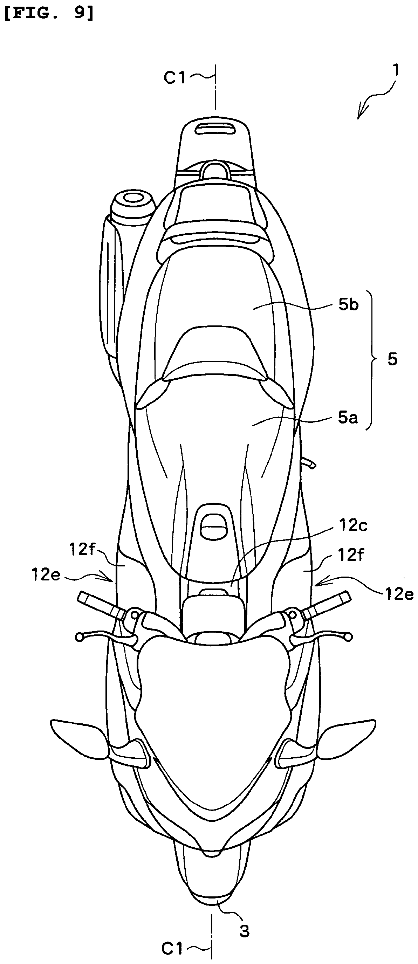

Next, a second aspect of the engine 2 in accordance with the embodiment will be described with reference to FIGs. 9 through 15. The same reference numerals and symbols will be given to parts similar to examples shown in above FIGs. 1 through 8 and descriptions about them will not be made in detail. Graphic representations and descriptions will not be made of parts similar to the examples described above shown in FIGs. 1 through 8.

FIG. 9 is a plan view of the motorcycle 1. The motorcycle 1 includes the engine 2 similarly to the motorcycle 1 shown in FIG.1. Further, for example, as shown in FIG. 9, the motorcycle 1 includes the seat 5 having the front seat part 5a and the rear seat part 5b, the center cover 12c extending forward from the position below the front end of the seat 5 while being inclined upward, and the pair of right and left foot boards 12e having the pair of right and left flat surfaces 12f on which a rider seated on the front seat part 5a places his/her right and left feet.

A line (vehicle centerline) C1 for indicating the center of the motorcycle 1 in the vehicle width direction is shown in FIG. 9. The vehicle centerline C1 is a straight line passing through the center of the front wheel 3 in the vehicle width direction and the center of the rear wheel in the vehicle width direction in a state that the front wheel 3 and the rear wheel 4 (see FIG. 1) are linearly disposed as in the motorcycle 1 straightly traveling.

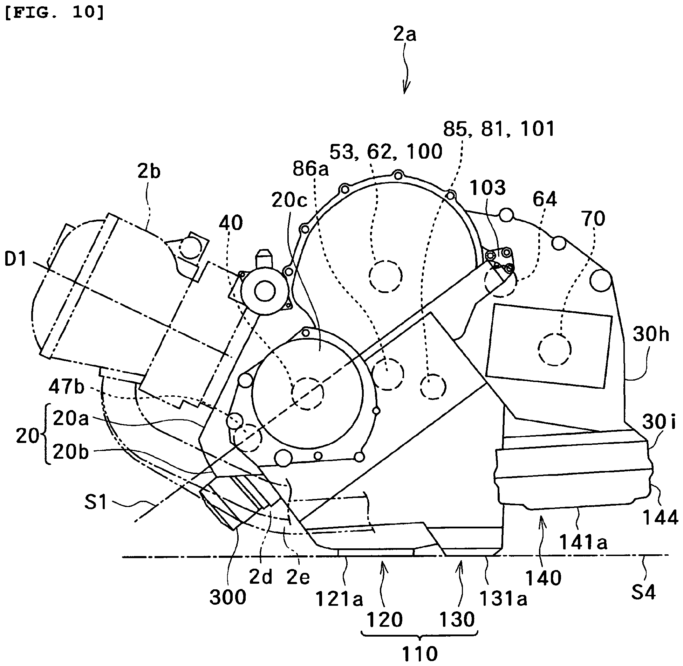

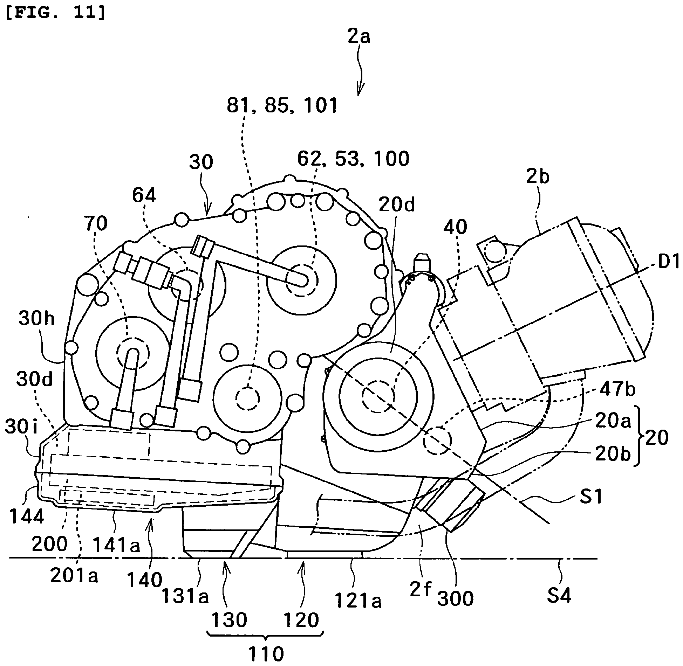

FIG. 10 is a side view of the engine case 2a. FIG. 11 is a right side view of the engine case 2a. FIGs. 10 and 11 show the engine case 2a with cover members 20c and 20d of the crankcase 20 for covering outsides of the crankshaft 40 in the vehicle width direction mounted thereon.

As shown in FIG. 10, the engine case 2a includes a bracket 103 disposed across the three cases that are the upper case 20a and the lower case 20b of the crankcase 20 and the left case 30b of the transmission case 30 and fastened and fixed to each of the three case members by bolt members. The above three case members are more unitarily combined together by the bracket 103. Thereby, rigidity of the engine case 2a as a whole can be more effectively enhanced.

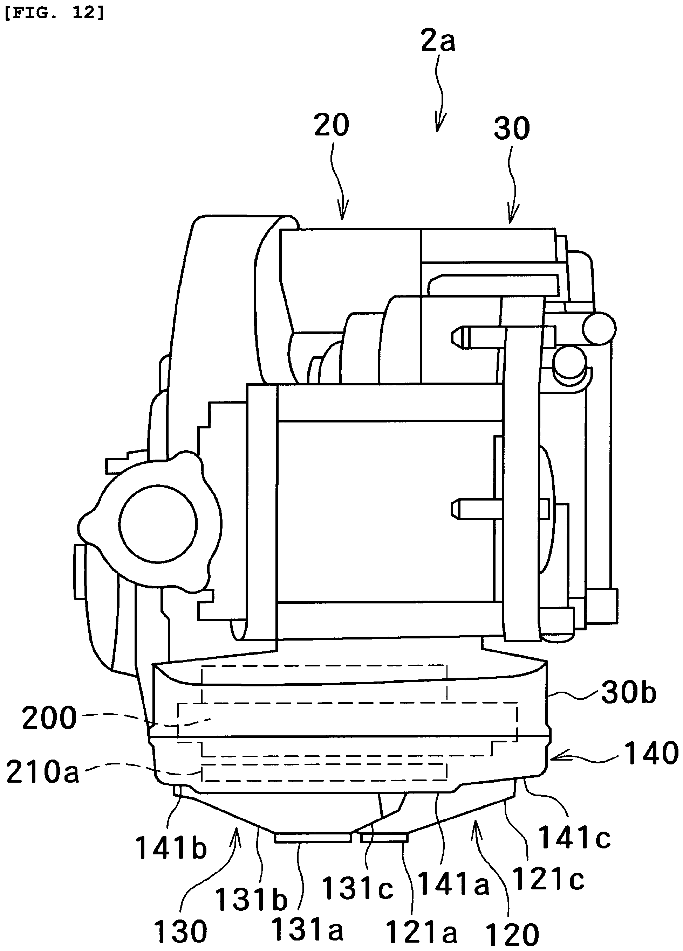

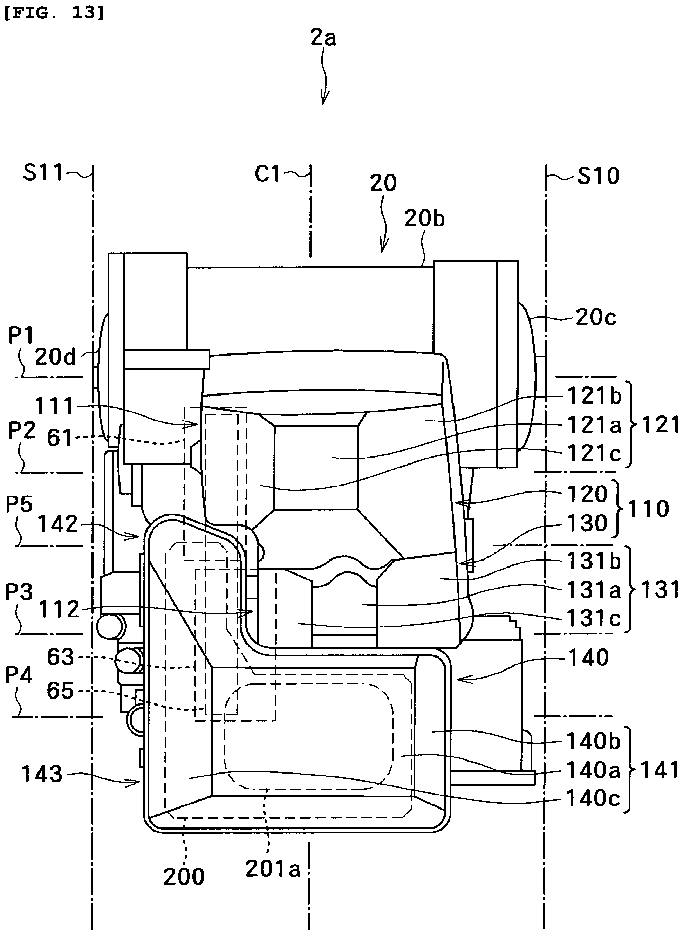

FIG. 12 is a rear view of the engine case 2a. FIG. 13 is a bottom view of the engine case 2a. FIG. 13 shows each of the axis P1 of the crankshaft 40, the axis P2 of the driving pulley shaft 62, the axis P3 of the driven pulley shaft 64, the axis P4 of the output shaft 70, and the axis P5 of the speed changer pump shaft 81 in the engine case 2a as seen from a lower side thereof.

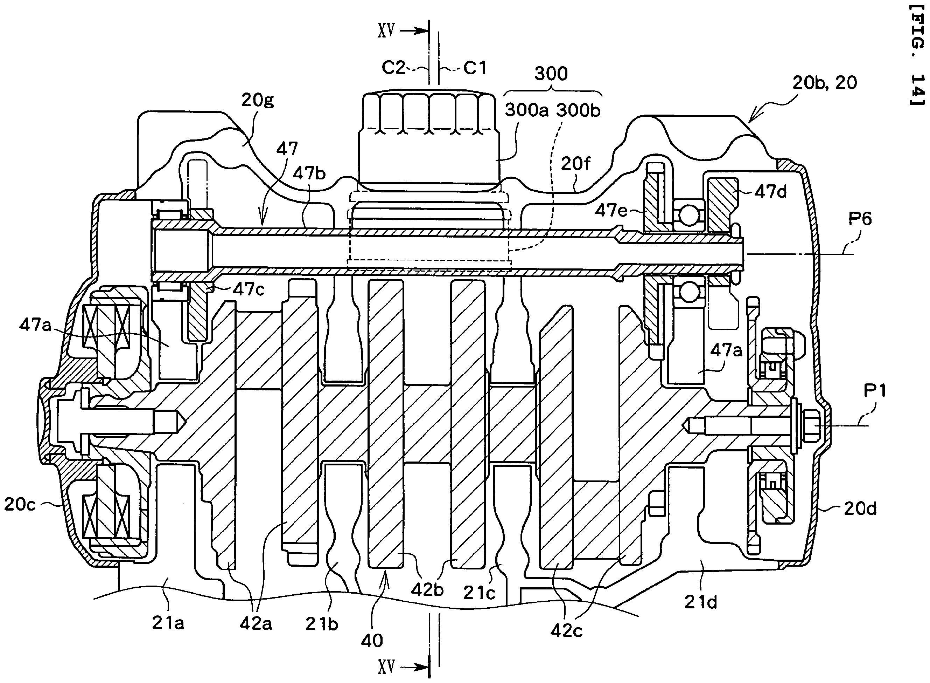

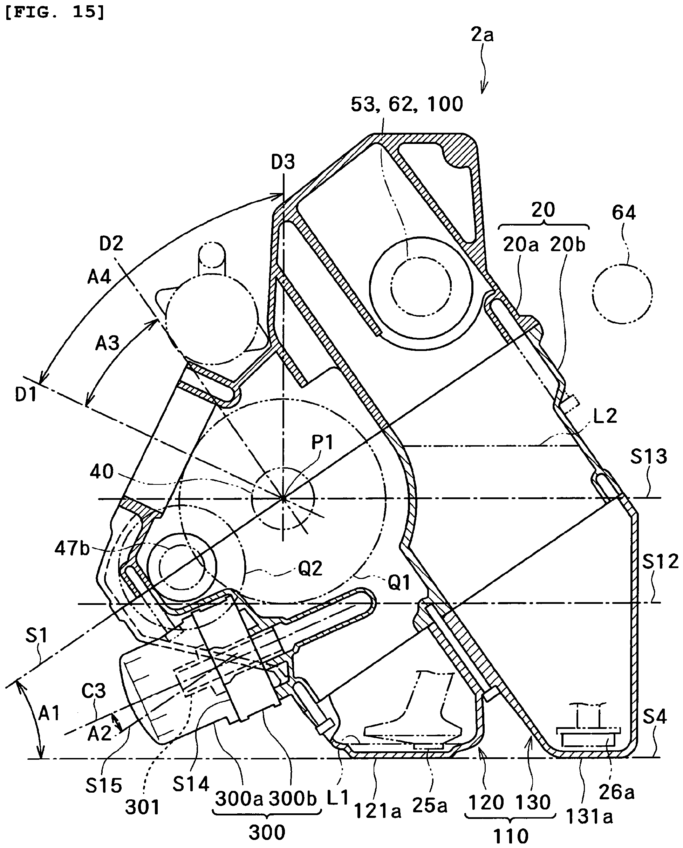

FIG. 14 is a cross-sectional view of the engine 2 cut along the splitting plane S1 of the crankcase 20 as seen from a position above the splitting plane S1. FIG. 15 is a cross-sectional view of the engine case 2a taken along line XV-XV shown in FIG. 14 (that is, an engine centerline C2). FIG. 14 shows the line (engine centerline) C2 for indicating the center of the engine in the vehicle width direction. The engine centerline C2 is a line which passes the central point of a central pair of crank webs 42b in a direction along the axis P1 of the crankshaft 40 (that is, the length direction of the crankshaft 40) and is perpendicular to the axis P1. The engine centerline C2 is parallel with the vehicle centerline C1 shown in FIG. 9 and slightly off the vehicle centerline in the vehicle width direction. FIG. 14 shows the lower case 20b of the crankcase 20 in a manner such that a mating surface 20g joined to the upper case 20a is exposed.

Similarly to the above example, the engine 2 in accordance with the second aspect includes the transmission or speed changer 60 (see FIG. 5) having the driving pulley 61 and the driven pulley 63 around which the metal V-belt 65 is wound, and includes the crankshaft 40, the driving pulley shaft 62, the driven pulley shaft 64, the output shaft 70, and the speed changer pump shaft 81 in parallel with each other as shown in FIGs. 10 and 11.

The driving pulley shaft 62 and the clutch shaft 53 are coaxially coupled together and construct the combined main shaft 100. The speed changer pump shaft 81 and the crankcase pump shaft 85 are coaxially coupled together and construct the combined pump shaft 101. FIG. 10 also shows a shaft 86a of the middle gear 86 (see FIG. 5) for coupling the crankshaft 40 and the combined pump shaft 101.

As shown in FIGs. 10 through 13, and 15, the engine 2 includes a crankcase-section oil pan 110 for receiving oil supplied to the crankshaft 40, and a speed-changer-section oil pan 140 for receiving oil supplied to the speed changer 60.

The crankcase-section oil pan 110 and the speed-changer-section oil pan 140 are formed separately from each other. Specifically, the crankcase-section oil pan 110 is provided to block an opening (not shown) formed at a lower end of the lower case 20b of the crankcase 20 from a lower side thereof. Meanwhile, the speed-changer-section oil pan 140 is provided to block the opening 30d (see FIG. 11) formed at the lower end of the left case 30b of the transmission case 30 from a lower side thereof.

The crankcase-section oil pan 110 has a crankcase oil pan 120 and the oil tank 130. Similarly to the crankcase oil pan 23 in the above example, the crankcase oil pan 120 is formed in a part on the bottom of the crankcase 20 and stores lubricating oil similarly to the crankcase oil pan 23 in the above example. Lubricating oil flows down from the crank chamber 21 and the clutch chamber 22 in the crankcase 20 into the crankcase oil pan 120 by gravity.

The crankcase oil pan 120 has a bottom surface 121 including a central bottom surface 121a, a left bottom surface 121b, and a right bottom surface 121c. The central bottom surface 121a is disposed in the lowest part in the crankcase oil pan 120, and extends along the horizontal plane S4. The induction part 25a (see FIG. 15) of the strainer 25 disposed in the crankcase oil pan 120 is disposed above the central bottom surface 121a.

Each of the left bottom surface 121b and the right bottom surface 121c is formed to be positioned higher as progressing away from the vehicle centerline C1 in the vehicle width direction to a side (that is, the outside in the vehicle width direction). In other words, the left bottom surface 121b is formed further leftward from a left end of the central bottom surface 121a to be inclined upward. The right bottom surface 121c is formed further rightward from a right end of the central bottom surface 121a to be inclined upward. Front and rear parts of the central bottom surface 121a in the bottom surface 121 are formed further forward and rearward from a front end and a rear end, respectively, of the central bottom surface 121a to be inclined upward.

Similarly to the oil tank 24 in the above example, the oil tank 130 is formed in another part of the bottom of the crankcase 20 (the part in the rear of the crankcase oil pan 120) adjacent to the crankcase oil pan 120 below the clutch chamber 22, and stores lubricating oil transported from the crankcase oil pan 120.

The oil tank 130 has a bottom surface 131 including a central bottom surface 131a, a left bottom surface 131b, and a right bottom surface 131c. The central bottom surface 131 is disposed in the lowest part in the oil tank 130, and extends evenly along the horizontal plane S4. The induction part 26a (see FIG. 15) of the strainer 26 disposed in the oil tank 130 is disposed above the central bottom surface 131a.

Each of the left bottom surface 131b and the right bottom surface 131c is formed to be positioned higher as progressing away from the vehicle center line C1 in the vehicle width direction to a side (that is, the outside in the vehicle width direction). In other words, the left bottom surface 131b is formed further leftward from a left end of the central bottom surface 131a to be inclined upward. The right bottom surface 131c is formed further rightward from a right end to be inclined upward. Front and rear parts of the central bottom surface 131a in the bottom surface 131 are formed further forward and rearward from a front end and a rear end, respectively, of the central bottom surface 131a to be inclined upward.

Similarly to the speed changer oil pan 38 in the above example, the speed-changer-section oil pan 140 stores oil supplied to the speed changer 60 by the speed changer oil pump 80. The speed-changer-section oil pan 140 has a bottom surface 141 including a central bottom surface 141a, a left bottom surface 141b, and a right bottom surface 141c. The central bottom surface 141a is disposed in the lowest part in the speed-changer-section oil pan 140, and evenly extends above the lowest surface of a bottom surface of the crankcase-section oil pan 110 (that is, the central bottom surface 121a of the crankcase oil pan 120 and the central bottom surface 131a of the oil tank 130). The induction part 201a of the strainer 201 disposed in the speed-changer-section oil pan 140 is disposed above the central bottom surface 141a (see FIGs. 11 through 13)

As shown in FIGs. 10, 11, and 15, the horizontal plane S4 extends on prolongation of the central bottom surfaces 121a and 131a along the central bottom surface 121a of the crankcase oil pan 120 and the central bottom surface 131a of the oil tank 130 that are the lowest end surfaces of the engine case 2a.

Each of the left bottom surface 141b and the right bottom surface 141c is formed to be positioned higher as progressing away from the vehicle centerline C1 in the vehicle width direction to a side (that is, the outside in the vehicle width direction). In other words, the left bottom surface 141b is formed further leftward from a left end of the central bottom surface 141a to be inclined upward. The right bottom surface 141c is formed further rightward from a right end of the central bottom surface 141a to be inclined upward. Front and rear parts of the central bottom surface 141a in the bottom surface 141 are formed further forward and rearward from a front end and a rear end, respectively, of the central bottom surface 141a to be inclined upward.

The speed-changer-section oil pan 140 is formed in an L-shape having a first part 142 disposed to the right of the vehicle centerline C1 along the metal belt 65 and a second part 143 extending from a part in the first part 142 adjacent to the driven pulley 63 to the left of the vehicle centerline C1.

In other words, as shown in FIG. 13, each of the driving pulley 61, the driven pulley 63, and the metal belt 65 wound around the driving pulley 61 and the driven pulley 63 is disposed to the right of the vehicle centerline C1. The first part 142 extending in the fore-and-aft direction in the speed-changer-section oil pan 140 is disposed to the right of the vehicle centerline C1 in the vehicle width direction along the metal belt 65.

The second part 143 is disposed across the vehicle centerline C1. That is, the second part 143 extends in the vehicle width direction from a rear part of the first part 142, and is disposed from the right side to the left side of the vehicle centerline C1. Specifically, the second part 143 is disposed along the output shaft 70 below the output shaft 70.

Similarly to the above example, the speed-changer-section oil pan 140 has the control unit 200 disposed inside for controlling oil supply to the speed changer 60 and the output shaft 70. The control unit 200 includes a valve mechanism for controlling pressure required for supplying oil stored in the speed-changer-section oil pan 140 to the speed changer 60.

As shown in FIG. 13, the control unit 200 is formed into an L-shape corresponding to the L-shape of the speed-changer-section oil pan 140. That is, a part of the control unit 200 is formed to extend in the fore-and-aft direction inside the first part 142 of the speed-changer-section oil pan 140. Another part of the control unit 200 is formed to extend in the vehicle width direction inside the second part 143.

On the other hand, the crankcase-section oil pan 110 is formed into an L-shape having a third part 111 (a front part of the crankcase oil pan 120) disposed along the length direction of the crankshaft 40 and a fourth part 112 (a rear part of the crankcase oil pan 120 and the oil tank 130) disposed in a position abutting on the first part 142 of the speed-changer-section oil pan 140 in the vehicle width direction.

In other words, the third part 111 is constructed with a part in front of the rear end of the central bottom surface 121a of the crankcase oil pan 120. The third part 111 extends from the left side to the right side of the vehicle centerline C1 in the vehicle width direction in front of the first part 142 and the second part 143 of the speed-changer-section oil pan 140.

The fourth part 112 is constructed with a part in the crankcase oil pan 120 in the rear of the rear end of the central bottom surface 121a and the oil tank 130. The fourth part 112 extends from the left side to the right side of the vehicle centerline C1 in the vehicle width direction in a part left of the first part 142 and in front of the second part 143 of the speed-changer-section oil pan 140.

In other words, the crankcase oil pan 120 itself is formed into an L-shape, and the crankcase-section oil pan 110 constructed with the crankcase oil pan 120 and the oil tank 130 adjoining each other is formed into an L-shape as a whole.

As described above, a part of the crankcase-section oil pan 110 and a part of the speed-changer-section oil pan 140 are disposed in a vicinity of the crankshaft 40 and a vicinity of the driving pulley shaft 62, respectively, in parallel with each other. That is, for example, the crankcase-section oil pan 110 as a whole and the second part 143 of the speed-changer-section oil pan 140 are disposed in the vicinity of the crankshaft 40 and the vicinity of the driving pulley shaft 62, respectively, in parallel with each other in the fore-and-aft direction.

The crankcase-section oil pan 110 and the speed-changer-section oil pan 140 are formed into L-shapes corresponding to each other. That is, as shown in FIG. 13, the crankcase-section oil pan 110 and the speed-changer-section oil pan 140 are formed into the L-shapes engaging in each other below the engine case 2a. Specifically, the fourth part 112 of the crankcase-section oil pan 110 and the first part 142 of the speed-changer-section oil pan 140 are disposed to overlap with each other in the vehicle width direction. Therefore, capacities of both the crankcase-section oil pan 110 and the speed-changer-section oil pan 140 can be effectively obtained in a limited space.

As described above, the left end of the crankshaft 40 is covered by the cover member 20c disposed on a left side surface of the crankcase 20. The right end of the crankshaft 40 is covered by the cover member 20d disposed on a right side surface of the crankcase 20 (see FIG. 5). Each of a length of the crankcase-section oil pan 110 in the vehicle width direction and a length of the speed-changer-section oil pan 140 in the vehicle width direction is within a range of length between a plane S10 perpendicular to the axis P1 of the crankshaft 40 passing through a left end in the vehicle width direction of the left cover member 20c of the crankcase 20 and a plane S11 perpendicular to the axis P1 of the crankshaft 40 passing through a right end in the vehicle width direction of the right cover member 20d of the crankcase 20. That is, each of a width of the crankcase-section oil pan 110 (a length between left and right ends of the crankcase-section oil pan 110) and a width of the speed-changer-section oil pan 140 (a length between left and right ends of the speed-changer-section oil pan 140) is within a range of width of the engine case 2a.

The speed-changer-section oil pan 140 is disposed below the transmission case 30. A rear end 144 of the speed-changer-section oil pan 140 is disposed further in the rear of a rear end of a part covering a rear side of the driven pulley 63 in the transmission case 30. In other words, as described above, the transmission case 30 is constructed to include the three case sections 30a, 30b, and 30c that can be split on the splitting planes S2 and S3 (see FIG. 5) perpendicular to the axis P2 of the driving pulley shaft 62. As shown in FIG. 11, the speed-changer-section oil pan 140 is formed to block the opening 30d formed at the lower end of the left case 30b.

As shown in FIGs. 10 and 11, a lower end 30i of the left case 30b is formed to protrude rearward in a manner such that a rear end thereof is positioned rearward of the rear end of the part covering the rear side of the driven pulley 63. The speed-changer-section oil pan 140 is provided to block the lower end 30i of the left case 30b protruding rearward from a lower side thereof. As a result, the rear end 144 of the speed-changer-oil pan 140 is disposed rearward of the rear end 30h of the part covering the rear side of the driven pulley 63 in the transmission case 30.

The width of the speed-changer-section oil pan 140 in the length direction of the crankshaft 40 is larger than the width of the crankcase-section oil pan 110, and the bottom surface 141 of the speed-changer-section oil pan 140 is disposed above the bottom surface of the crankcase-section oil pan 110 (that is, the bottom surface 121 of the crankcase oil pan 120 and the bottom surface 131 of the oil tank 130). Meanwhile, the engine 2 is a multi-cylinder engine including three cylinders. Three exhaust conduits 2d, 2e, and 2f extend out from the cylinder block 2b. Specifically, as shown in FIGs. 10 and 11, each of the three exhaust conduits 2d, 2e, and 2f extends out downwardly rearward from a front side surface of the cylinder block 2b.

As shown in FIG. 10, the two left exhaust conduits 2d and 2e extend rearward on a left side of the crankcase 20. As shown in FIG. 11, the right exhaust conduit 2f extends rearward on a right side of the crankcase 20.

In the engine 2, the two left exhaust conduit 2d and 2e can be disposed on a left side of the crankcase-section oil pan 110 in a reduced width, and the right exhaust conduit 2f can be disposed on a right side of the crankcase-section oil pan 110. Further, the three exhaust conduits 2d, 2e, and 2f can be disposed to gather below the speed-changer-section oil pan 140 in a reduced height in the engine 2.

As shown in FIGs. 14 and 15, the engine 2 includes an oil unit 300 having an oil filter 300a for filtering oil and an oil cooler 300b for cooling oil in a front end part of the crankcase 20. It is preferable that the oil unit 300 be disposed to be exposed on a front side of the vehicle in view of maintenance of the oil unit 300 and cooling characteristics of the oil cooler 300b.

The oil filter 300a and the oil cooler 300b are formed into cylindrical members. A circular end surface in a rear part of the oil filter 300a is joined to a circular end surface in a front part of the oil cooler 300b, and thereby they are coupled together and constructed the unitary oil unit 300.

An oil passage member 301 is inserted into the oil unit 300. A hollow part formed in the oil passage member 301 forms the oil passage 28b similar to the oil passage shown in FIG. 2.

The oil unit 300 is disposed in a position as far in the rear and high as possible. First, as shown in FIG. 14, a central part 20f of the front end part in the crankcase 20 in the direction along the axis P1 of the crankshaft 40 is formed to be recessed rearward.

The oil unit 300 is provided to protrude forward from the central part 20f recessed rearward in the crankcase 20. In other words, the oil unit 300 is disposed in front of the central cylinder in the vehicle width direction among the three cylinders installed in the engine 2. Specifically, as shown in FIG. 14, the oil unit 300 is disposed in front of the crank web pair 42b provided at a center in the direction along the axis P1 of the crankshaft 40 among three crank web pairs 42a, 42b, and 42c provided on the crankshaft 40.

The position of the oil unit 300 in the length direction of the crankshaft 40 is not limited to a range of a cylinder disposed at the center in the length direction in the case that the engine 2 is a multi-cylinder engine having three cylinders or more. However, for example, the oil unit can be disposed within a range of one or a plurality of cylinders except for cylinders at both ends in the length direction.

As shown in FIG. 14, the engine 2 includes the balancer 47 in front of the crankshaft 40. That is, as shown in FIG. 8, the balancer 47 is disposed in front of the crankshaft 40 in parallel with the crankshaft 40 so that the axis P6 of the shaft 47b thereof is positioned on the splitting plane S1.

The balancer shaft 47b is rotatably supported by the crankcase 20. Specifically, as shown in FIG. 14, a left end part of the balancer shaft 47b is pivotally supported by the pivot support 47a on the left side of the crankcase 20 via a needle bearing. A right end part of the balancer shaft 47b is pivotally supported by the pivot support 47a on the right side of the crankcase 20 via a ball bearing.

The balancer 47 has a pair of left and right balance weights 47c and 47d provided in both the end parts of the balancer shaft 47b. That is, as shown in FIG. 14, the left balance weight 47c is provided adjacently on a right side of the left pivot support 47a. The right balance weight 47d is provided adjacently on a right side of the right pivot support 47a.

A gear 47e for driving the balancer shaft 47b while being linked with the crankshaft 40 is provided in a position adjacent to a left side of the right balancer weight 47d having the right pivot support 47a interposed between them. The gear 47e is engaged with the gear formed on the outer periphery of the right crank web constructing the right crank web pair 42c of the crankshaft 40. The balancer shaft 47b is coupled with the crankshaft 40 via the gear 47e, and driven by rotations of the crankshaft 40.

The left balance weight 47c and the right balance weight 47d are disposed to left and right, respectively, of the oil unit 300. That is, as shown in FIG. 14, the left balance weight 47c and the right balance weight 47d are disposed on the left side and the right side, respectively, of the central part 20f of the crankcase 20.

The oil cooler 300b which is a rear part of the oil unit 300, the left balance weight 47c, and the right balance weight 47d are linearly disposed to overlap with each other in the length direction of the crankshaft 40. With such a construction, the oil unit 300 is disposed in the rear of the balancer 47 although the balancer 47 is installed in front of the crankshaft 40 in the engine 2.

As shown in FIG. 15, the oil unit 300 extends forward while being inclined downward. The splitting plane S1 of the crankcase 20 also extends forward while being inclined downward. The angle A1 formed by the splitting plane S1 and the horizontal plane S4 is set within a range between 25° and 45°.

A line perpendicular to a mounting plane S14 passing through a center of the plane S14 on which the oil filter 300a is mounted on the oil cooler 300b (in other words, a centerline C3 of the oil unit 300) extends forward while being inclined to be close to the splitting plane S1 of the crankcase 20. Specifically, an angle A2 formed by the oil unit centerline C3 and a plane S15 parallel with the splitting plane S1 passing through the center of the mounting plane S14 can be set to approximately 10°.

As a result, as shown in FIG. 15, the oil unit 300 can be disposed in a manner such that a lower end thereof is positioned above a lower end of the crankcase-section oil pan 110 (which is the horizontal plane S4 shown in FIG. 15). As described above, the oil unit 300 can be disposed in a position close to the crankshaft 40 in the engine 2.

The cylinder block 2b is provided to be inclined forward relatively to the splitting plane S1 of the crankcase 20. That is, as shown in FIG. 15, a line (cylinder centerline) D1 along the length direction of the cylinder block 2b (a direction in which the pistons reciprocate) is inclined more forward than a line D2 perpendicular to the splitting plane S1 of the crankcase 20. Specifically, an angle A3 formed by the cylinder centerline D1 and the perpendicular line D2 can be set to 25° or larger, for example. As a result, an angle A4 formed by the cylinder centerline D1 and a line D3 perpendicular to the horizontal plane S4 can be set to 60° or larger in the engine 2.

As shown in FIG. 15, the balancer shaft 47b is disposed above a horizontal plane S12 passing through a lower end of an area Q1 of the crankshaft 40 including the crank webs 42. Further, an area Q2 of the pair of left and right balance weights 47c and 47d is disposed below a horizontal plane S13 passing along the axis P1 of the crankshaft 40.

With such a construction, the engine 2 includes the crankcase 20 of which the splitting plane S1 is inclined and the balancer shaft 47b disposed in front of the crankshaft 40 on the splitting plane S1. However, the height of the cylinder block 2b is controlled, and the oil unit 300 is disposed in a higher position. Thereby, a vertical length of the engine 2 as a whole can be effectively reduced.

As shown in FIG. 15, a sufficient clearance is obtained between a level plane L1 of oil stored in the crankcase oil pan 120 and the balancer 47. Therefore, the balance weights 47c and 47d can be effectively prevented from being immersed in oil in the crankcase oil pan 120, and loss in driving force can be effectively reduced. FIG. 15 also shows a level plane L2 of oil in the oil tank 130.

The crankshaft 40, the combined main shaft 100, the driven pulley shaft 64, the output shaft 70, and the combined pump shaft 101 are formed separately from each other, and disposed in parallel with each other in the engine 2. Thereby, the length of the engine 2 in the vehicle width direction can be reduced, and the engine 2 can be also made compact.

The engine in accordance with the present invention may be an engine including one or a plurality of cylinders. However, the engine may preferably be an engine including a plurality of cylinders disposed in line. Particularly, the engine may preferably be an engine including three or more cylinders disposed in line. At least a portion of the speed changer oil pump 80 and the crankcase oil pump 82 (the scavenging pump 83 and the feed pump 84) is not limited to trochoid pump, but can be another type of oil pump.

As described in the foregoing, a compact engine can be realized with the present invention. Therefore, the engine in accordance with the present invention is suitable for a straddle type vehicle such as a motorcycle in which a space to dispose an engine is limited.

As described in the foregoing, the engine 2 includes the crankcase 20 which houses the crankshaft 40 and can be split on the splitting plane S1 passing along the axis P1 of the crankshaft 40, and the transmission case 30 having members (the right case 30a and the left case 30b) unitarily formed while including a driving-side pivot support (the driving pulley right pivot support 33a and the driving pulley left pivot support 33b) for pivotally supporting the driving pulley shaft 62 of the speed changer 60 and a driven-side pivot support (the driven pulley right pivot support 34a and the driven pulley left pivot support 34b) for pivotally supporting the driven pulley shaft 64 of the speed changer 60 and housing the driving pulley shaft 62 and the driven pulley shaft 64. In the engine 2, each of one part (the upper case 20a) and the other part (the lower case 20b) of the crankcase 20 from the splitting plane S1 is combined with one section and another section of the members (the right case 30a and the left case 30b) of the transmission case 30. The engine 2 has the crankshaft 40, and the transmission or speed changer 60 including the driving pulley shaft 62 and the driven pulley shaft 64. The engine also includes the crankcase 20 which houses the crankshaft 40 and can be split on the splitting plane S1 passing along the axis P1 of the crankshaft 40, and the transmission case 30 housing the driving pulley shaft 62 and the driven pulley shaft 64. In the engine 2, the transmission case 30 has unitary members including the driving-side pivot support for pivotally supporting the driving pulley shaft 62 and the driven-side pivot support for pivotally supporting the driven pulley shaft 64. The one part of the crankcase 20 from the splitting plane S1 is combined with the one section of the members of the transmission case 30. The other part of the crankcase 20 from the splitting plane S1 is combined with the another section of the member of the transmission case 30. Thereby, rigidity of the split crankcase 20 can be obtained without a complicated construction for obtaining rigidity as in the conventional technique, but with a simple construction such that a part of the upper case 20a and a part of the lower case 20a of the crankcase 20 are combined with a common member in the transmission case. Combining of the one part and the other part of the crankcase 20 from the splitting plane S1 with the one section and the another section may be achieved by means of direct combining between the parts, or via members disposed in each of the cases. That is, the crankcase 20 and the transmission case may be combined together by mutual fitting between parts thereof, by fastening with bolts, etc., or via a shaft extending from an inside of the crankcase 20 to an inside of the transmission case 30, of which one end is supported by a part of the crankcase 20 and the other end is supported by a part of the transmission case 30. Rigidity of the crankcase 20 can be enhanced also by means of combining the upper case 20a and the lower case 20b with each of one section and another section of either one of the left case 30b or the right case 30a. Since the crankcase can be split on the plane passing along the axis on the crankshaft, the pivot support for pivotally supporting the journal of the crankshaft can be formed in each of parts between a plurality of cylinders in the case that the engine has a plurality of cylinders. Therefore, the crankcase alone can obtain sufficient rigidity for supporting the crankshaft. The transmission case is constructed in a manner such that it can be split on the plane perpendicular to the length directions of the driving pulley shaft and the driven pulley shaft. Therefore, the transmission case alone can obtain sufficient rigidity to bear a mechanical load applied in a direction of the pulley shaft in the case that the driving pulley and the driven pulley are moved along the pulley shafts for speed or gearing ratio change.

In the engine 2, each of the one part (the upper case 20a) and the other part (the lower case 20b) of the crankcase 20 is fixed to the one section and the another section of the transmission case 30 by fastening members (the bolt members 91). Thereby, rigidity of the crankcase 20 can be enhanced with a simple construction such that the upper case 20a and the lower case 20b of the crankcase 20 are combined with a member of the transmission case 30 by fastening members. The fastening member is not limited to a bolt member, but other kinds of members can be used as the fastening member if it can fasten and fix a plurality of case members disposed to overlap with each other in the vehicle width direction together.

In the engine 2, the one part (the right clutch pivot support 22c of the upper case 20a) of the crankcase 20 and the one section (the driving pulley left pivot support 33b of the speed changer left case 30b) of the transmission case 30 are formed into shapes (cylinders) corresponding to each other. One of them (the driving pulley left pivot support 33b) fits into the other (the right clutch pivot support 22c). The other part (the crankcase pump right insertion part 29d of the lower case 20b) of the crankcase 20 and the another section (the speed changer pump insertion part 37c of the left case 30b) of the transmission case 30 are formed into shapes (cylinders) corresponding to each other. One of them (the crankcase pump right insertion part 29d) fits into the other (the speed changer pump insertion part 37c). Thereby, rigidity of the crankcase 20 and rigidity of the engine 2 including the crankcase 20 can be enhanced with a simple construction such that the pivot support of the transmission case and the pivot support of the crankcase fit together, for example. That is, for example, the engine has two pairs of a shaft in the crankcase and a shaft in the transmission case that are coaxially disposed. Specifically, for example, the engine has a first pair formed with a crankcase-side first shaft and a transmission case-side first shaft and a second pair formed with a crankcase-side second shaft and a transmission case-side second shaft. Both a part of the speed changer first shaft and a part of the transmission case-side second shaft are inserted in different parts of a common member of the transmission case 30. A part of the crankcase-side first shaft is inserted in a part of the upper case of the crankcase. A part of the crankcase-side second shaft is inserted in a part of the lower case of the crankcase. Further, the part of the member of the transmission case in which the transmission case-side first shaft is inserted and the part of the upper case in which the crankcase-side first shaft is inserted are fitted together. The other part of the member of the transmission case in which the part of the transmission case-side second shaft is inserted and the part of the lower case in which the crankcase-side second shaft is inserted are fitted together. It is required only that the shafts in the crankcase and the shafts in the transmission case be coaxially disposed, but it is not necessarily required that they should be coupled together. It is required only that the engine have at least two pairs of the shafts coaxially disposed. The engine may have three pairs of shafts or more. The fitting parts may be parts other than the parts in which the shafts are inserted as in the above example. The shapes of the parts are not limited to a cylindrical shape.

The engine 2 may include a first shaft (the combined main shaft 100) and a second shaft (the combined pump shaft 101) in each of which one end is pivotally supported by the crankcase 20 and the other end is pivotally supported by the transmission case 30. In the engine 2, the first shaft (the combined main shaft 100) may be inserted into the one part (the right clutch pivot support 22c of the upper case 20a) of the crankcase 20 and the one section (the driving pulley left pivot support 33b of the speed changer left case 30b) of the transmission case 30 that are fitted together. The second shaft (the combined pump shaft 101) may be inserted into the other part (the crankcase pump right insertion part 29d of the lower case 20b) of the crankcase 20 and the another section (the speed changer pump insertion part 37c of the left case 30b) of the transmission case 30 that are fitted together. Thereby, the crankcase and the transmission case are combined together by mutual fitting of their parts and by the shafts disposed across both the cases. Therefore, rigidity of the crankcase and rigidity of the engine 2 including the crankcase 20 can be more certainly enhanced. The first and second shafts fitted in the fitting part is not limited to the above example if their one ends are pivotally supported by the crankcase 20 and their other ends are pivotally supported by the transmission case 30.

The engine 2 includes a crankcase-side first shaft (the clutch shaft 53) and a crankcase-side second shaft (the crankcase pump shaft 85) each of which is pivotally supported by the one part (the upper case 20a) and the other part (the lower case 20b) from the splitting plane S1 of the crankcase 20, and a speed-changer-side first shaft (the driving pulley shaft 62) and a speed-changer-side second shaft (the speed changer pump shaft 81) each of which is supported by the one section (the driving pulley right pivot support 33a) and the another section (the speed changer pump support 37) of the transmission case 30. In the engine 2, the crankcase-side first shaft (the clutch shaft 53) and the speed-changer-side first shaft (the driving pulley shaft 62) are coaxially coupled together. The crankcase-side second shaft (the crankcase pump shaft 85) and the speed-changer-side second shaft (the speed changer pump shaft 81) are coaxially coupled together. That is, The engine includes the crankcase-side first shaft pivotally supported by the one part of the crankcase from the splitting plane, the crankcase-side second shaft pivotally supported by the another section of the crankcase from the splitting plane, the speed-changer-side first shaft pivotally supported by the one section of the transmission case, and a speed-changer-side second shaft individually pivotally supported the another section of the transmission case. In the engine, the crankcase-side first shaft and the speed-changer-side first shaft are coaxially coupled together. The crankcase-side second shaft and the speed-changer-side second shaft are coaxially coupled together. Thereby, the shafts pivotally supported by the transmission case and the shafts pivotally supported in the crankcase are coupled together. Therefore, rigidity of the crankcase 20 and the rigidity of the engine 2 including the crankcase 20 can be certainly enhanced. For example, the engine has two pairs of a shaft in the crankcase and a shaft in the transmission case that are coaxially coupled together. Specifically, for example, the engine has a first pair formed with the crankcase-side first shaft and the transmission case-side first shaft and a second pair formed with the crankcase-side second shaft and the transmission case second shaft. Both one end of the transmission case-side first shaft and one end of the transmission case-side second shaft are pivotally supported by different parts in a common member of the transmission case 30. The other end of the crankcase-side first shaft is pivotally supported by a part of the upper case of the crankcase. The other end of the crankcase-side second shaft is pivotally supported by the lower case of the crankcase. Further, the other end of the transmission case-side first shaft and the one end of the crankcase-side first shaft are coupled together, and the other end of the transmission case-side second shaft and the one end of the crankcase-side second shaft are coupled together. It is required that the engine have at least two pairs of shafts. The engine may have three or more pairs of shafts. The crankcase-side first shaft and the crankcase-side second shaft are not limited to the above example if each of them is pivotally supported by the one part and the other part from the splitting plane S1 of the crankcase 20. The speed-changer-side first shaft and the speed-changer-side second shaft are not limited to the above example if each of them is pivotally supported by the one section and the another section of the transmission case 30.

The engine 2 has a plurality of shafts (the driven pulley shaft 64 and the output shaft 70) outside of the crankcase 20. The plurality of shafts couple the transmission device (the driving force transmission device 8) for transmitting driving force to the rear wheel 4 of the straddle type vehicle (the motorcycle 1) including the engine 2 and the driven pulley 63 together. That is, the engine includes a shaft formed separately from the driven pulley shaft for coupling the transmission device for transmitting driving force to the rear wheel of the straddle type vehicle including the engine and the driven pulley shaft together. In the engine, the shaft separately formed is installed to the rear of the crankcase. This realizes an improvement in operability in assembling and dismantling the engine 2. The shaft for coupling the transmission device and the driven pulley is not limited to the above example. For example, only a shaft for driving the driven pulley (the driven pulley shaft 64) may be provided, and a transmission device may be coupled to the shaft. The transmission device is not limited to the above driving force transmission device 8 of a shaft drive type which has the connecting shaft 71 and the drive shaft 9, but a transmission device of a chain drive type can be applied to the transmission device, for example. That is, for example, a transmission device of a chain drive type can be used which has a drive sprocket provided at a tip (the left end) of the output shaft 70, a driven sprocket provided at the left end of the rear wheel rotating shaft 4a, and an endless-shaped chain wound around both the sprockets.

The engine 2 has a shaft (the output shaft 70) formed separately from the driven pulley shaft 64 in the rear of the crankcase 20. The shaft couples the transmission device (the driving force transmission device 8) for transmitting driving force to the rear wheel 4 of the straddle type vehicle (the motorcycle 1) including the engine 2 and the driven pulley shaft 64 together. Thereby, a size of the engine 2 in the direction along the driven pulley shaft 64 can be reduced. The parts of the engine 2 in an area of the transmission case 30 (the transmission case 30, the speed changer 60 and the output shaft 70 housed therein, etc.) can be constructed and operated independently of the parts in an area of the crankcase 20 (the crankcase 20, the clutch 50 housed therein, etc.). This realizes an improvement in operability in assembling and dismantling the engine 2. The shaft formed separately from the driven pulley shaft 64 is not limited to the above example if it is disposed in the rear of the crankcase 20. The shaft disposed in the rear of the crankcase 20 is not limited to a shaft disposed to the rear of a rearmost part of the crankcase 20. For example, the shaft may extend into a rear outer surface of the crankcase 20.

### Description of Reference Numerals and Symbols

- 1:: motorcycle
- 2:: engine
- 2a:: engine case
- 2b:: cylinder block
- 3:: front wheel
- 4:: rear wheel
- 5:: seat
- 6:: handlebar
- 7:: front fork
- 8:: driving force transmission device
- 9:: drive shaft
- 10:: muffler
- 11:: pivot shaft
- 12:: vehicle body cover
- 13:: cylinder
- 14:: cylinder head
- 15:: cover
- 20:: crankcase
- 20a:: upper case
- 20b:: lower case
- 21:: crank chamber
- 22:: clutch chamber
- 22a:: left clutch pivot support
- 22b:: midway clutch pivot support
- 22c:: right clutch pivot support
- 23:: crankcase oil pan
- 24:: oil tank
- 29a:: right pump support
- 29b:: left pump support
- 29c:: crankcase pump left pivot support
- 29d:: crankcase pump right insertion part
- 30:: transmission case
- 30a:: right case
- 30b:: left case
- 30c:: left end case
- 30d:: opening
- 31:: speed changer chamber
- 32:: output chamber
- 33a:: driving pulley right pivot support
- 33b:: driving pulley left pivot support
- 34a:: driven pulley right pivot support
- 34b:: driven pulley left pivot support
- 37:: speed changer pump support
- 37c:: speed changer pump insertion part
- 38:: speed changer oil pan
- 40:: crankshaft
- 50:: clutch
- 53:: clutch shaft
- 60:: speed changer
- 61:: driving pulley
- 62:: driving pulley shaft
- 63:: driven pulley
- 64:: driven pulley shaft
- 65:: metal belt
- 70:: output shaft
- 71:: connecting shaft
- 80:: speed changer oil pump
- 81:: speed changer pump shaft
- 82:: crankcase oil pump
- 85:: crankcase pump shaft
- 85a:: crankcase oil pump shaft
- 85b:: coolant pump shaft
- 86:: middle gear
- 88:: engaging member
- 90:: fastening bolt hole
- 91:: bolt member
- 100:: combined main shaft
- 101:: combined pump shaft
- 110:: crankcase-section oil pan
- 120:: crankcase oil pan
- 130:: oil tank
- 140:: speed-changer-section oil pan
- 141:: bottom surface
- 200:: control unit

## Claims

1. An engine (2) including:
a transmission having a driving pulley shaft (62) and a driven pulley shaft (64), and
a crankcase (20) which houses a crankshaft (40) and can be split into two parts along a splitting plane (Sl) passing along an axis (PI) of the crankshaft (40); and
a transmission case (30) housing the driving pulley shaft (62) and the driven pulley shaft (64),
wherein the transmission case (30) includes a support (33a, 33b) for the driving pulley shaft (62) and a support (34a, 34b) for the driven pulley shaft (64),
one of said parts of the crankcase (20a) is coupled to one section of the transmission case (30), and
the other of said parts of the crankcase (20b) is coupled to another section of the transmission case (30); **characterized in that** each of the one part (20a) and the other part (20b) of the crankcase (20) is fixed respectively to the one section and the another section of the transmission case (30) by a respective fastening member (91).

2. The engine according to claim 1,
wherein the one part (22c) of the crankcase (20a) and the one section (33b) of the transmission case (30b) are formed into shapes corresponding to each other, whereby one of them (33b) is fitted into the other (22c),
the other part (29b) of the crankcase (20b) and the another section (37c) of the transmission case (30b) are formed into shapes corresponding to each other, and whereby one of them (29d) is fitted into the other (37c).

3. The engine according to claim 2 further comprising first and second shafts (100, 101) in each of which one end is supported by the crankcase (20) and the other end is supported by the transmission case (30),
wherein the first shaft (100) is inserted into the one part (22c) of the crankcase (20a) and the one section (33b) of the transmission case (30b), and
the second shaft (101) is inserted into the other part (29d) of the crankcase (20b) and the another section (37c) of the transmission case (30b).

4. The engine according to claim 1, 2 or 3, further comprising: a crankcase-side first shaft (53) pivotally supported by the one part (20a) of the crankcase (20);
a crankcase-side second shaft (85) pivotally supported by the other part (20b) of the crankcase (20);
a transmission-side first shaft (62) supported by the one section (30b) of the transmission case (30); and
a transmission-side second shaft (81) supported by the another section of the transmission case (30),
wherein the crankcase-side first shaft (53) and the transmission-side first shaft (62) are coaxially coupled together, and
the crankcase-side second shaft (85) and the transmission-side second shaft (81) are coaxially coupled together.

5. The engine according to any of claims 1 through 4,
having a shaft or a plurality of shafts (64, 70) outside of the crankcase (20), wherein the shaft or shafts (64, 70) couple a transmission device (8) for transmitting driving force to a rear wheel (4) of a straddle type vehicle (1) including the engine (2) and the driven pulley (63).

6. The engine according to any of claims 1 through 4, comprising a shaft (70) formed separately from the driven pulley shaft (64) for coupling a transmission device (8) for transmitting driving force to a rear wheel (4) of a straddle type vehicle (1) including the engine (2) and the driven pulley shaft (64) together,
wherein the shaft (70) separately formed is installed to the rear of the crankcase (20).

7. The engine according to any of claims 1 to 6,
wherein the transmission case (30) includes a unitary member (30a, 30b) providing the support (33a, 33b) for the driving pulley shaft (62) and the support (34a, 34b) for the driven pulley shaft (64), and the parts of the crankcase (20a, 20b) are combined with sections of the member (30a, 30b).

8. The engine according to any of claims 1 to 7, wherein said at least two parts (20a, 20b) of the crankcase are combined with a common member (30b) of the transmission case (30).

9. A straddle type vehicle (1) comprising the engine (2) according to any of claims 1 to 8.

## Patentansprüche

1. Motor (2), Folgendes umfassend:
ein Getriebe, besitzend einen Antriebsscheibenschaft (62) und einen angetriebenen Scheibenschaft (64), und
ein Kurbelgehäuse (20), welches eine Kurbelwelle (40) aufnimmt und in zwei Teile entlang einer Spaltebene (S1), welche entlang einer Achse (P1) der Kurbelwelle (40) verläuft, gespalten werden kann; und
ein Getriebegehäuse (30), welches den Antriebsscheibenschaft (62) und den angetriebenen Scheibenschaft (64) aufnimmt,
wobei das Getriebegehäuse (30) eine Halterung (33a, 33b) für den Antriebsscheibenschaft (62) und eine Halterung (34a, 34b) für den angetriebenen Scheibenschaft (64) aufnimmt,
einer der Teile des Kurbelgehäuses (20a) mit einem Abschnitt des Getriebegehäuses (30) verbunden ist, und
der andere der Teile des Kurbelgehäuses (20a) mit einem anderen Abschnitt des Getriebegehäuses (30) verbunden ist;
**dadurch gekennzeichnet, dass**
jeder von dem einen Teil (20a) und dem anderen Teil (20b) des Kurbelgehäuses (20) jeweils mit dem einen Abschnitt und dem anderen Abschnitt des Getriebegehäuses (30) durch ein jeweiliges Befestigungsglied (91) befestigt ist.

2. Motor nach Anspruch 1,
bei welchem der eine Teil (22c) des Kurbelgehäuses (20a) und der eine Abschnitt (33b) des Getriebegehäuses (30b) zu Formen gebildet sind, welche einander entsprechen, wobei einer von ihnen (33b) in den anderen (22c) eingepasst ist,
der andere Teil (29b) des Kurbelgehäuses (20b) und der andere Abschnitt (37c) des Getriebegehäuses (30b) zu Formen gebildet sind, welche einander entsprechen, und wobei einer von ihnen (29d) in den anderen (37c) eingepasst ist.

3. Motor nach Anspruch 2, zudem umfassend einen ersten und einen zweiten Schaft (100, 101), wobei ein Ende davon jeweils durch das Kurbelgehäuse (20) gestützt wird und das andere Ende durch das Getriebegehäuse (30) gestützt wird,
wobei der erste Schaft (100) in den einen Teil (22c) des Kurbelgehäuses (20a) und in den einen Abschnitt (33b) des Getriebegehäuses (30b) eingelegt ist, und
der zweite Schaft (101) in den anderen Teil (29d) des Kurbelgehäuses (20b) und in den anderen Abschnitt (37c) des Getriebegehäuses (30b) eingelegt ist.

4. Motor nach Anspruch 1, 2 oder 3, zudem umfassend: einen ersten kurbelgehäuseseitigen Schaft (53), schwenkbar gestützt durch den einen Teil (20a) des Kurbelgehäuses (20);
einen zweiten kurbelgehäuseseitigen Schaft (85), schwenkbar gestützt durch den anderen Teil (20b) des Kurbelgehäuses (20);
einen ersten getriebeseitigen Schaft (62), gestützt durch den einen Abschnitt (30b) des Getriebegehäuses (30); und
einen zweiten getriebeseitigen Schaft (81), gestützt durch den anderen Abschnitt des Getriebegehäuses (30),
wobei der erste kurbelgehäuseseitige Schaft (53) und der erste getriebeseitige Schaft (62) koaxial miteinander verbunden sind, und
der zweite kurbelgehäuseseitige Schaft (85) und der zweite getriebeseitige Schaft (81) koaxial miteinander verbunden sind.

5. Motor nach einem der Ansprüche 1 bis 4,
besitzend einen Schaft oder eine Vielzahl von Schäften (64, 70) außerhalb des Kurbelgehäuses (20), wobei der Schaft oder die Schäfte (64, 70) eine Übertragungsvorrichtung (8) zum Übertragen von Antriebskraft an ein Hinterrad (4) eines Grätschsitzfahrzeugs (1) verbindet/verbinden, umfassend den Motor (2) und die angetriebene Scheibe (63).

6. Motor nach einem der Ansprüche 1 bis 4, beinhaltend einen Schaft (70), gebildet getrennt vom angetriebenen Scheibenschaft (64), zum Verbinden einer Übertragungsvorrichtung (8) zum Übertragen von Antriebskraft an ein Hinterrad (4) eines Grätschsitzfahrzeugs (1) umfassend den Motor (2), mit der angetriebenen Scheibe (64),
wobei der separat gebildete Schaft (70) im hinteren Teil des Kurbelgehäuses (20) installiert ist.

7. Motor nach einem der Ansprüche 1 bis 6,
bei welchem das Getriebegehäuse (30) ein einzelnes Glied (30a, 30b) umfasst, welches die Halterung (33a, 33b) für den Antriebsscheibenschaft (62) und die Halterung (34a, 34b) für den angetriebenen Scheibenschaft (64) bereitstellt, und die Teile des Kurbelgehäuses (20a, 20b) mit Abschnitten des Gliedes (30a, 30b) kombiniert sind.

8. Motor nach einem der Ansprüche 1 bis 7, wobei die mindestens zwei Teile (20a, 20b) des Kurbelgehäuses mit einem gemeinsamen Glied (30b) des Getriebegehäuses (30) kombiniert sind.

9. Grätschsitzfahrzeug (1), beinhaltend den Motor (2) nach einem der Ansprüche 1 bis 8.

## Revendications

1. Moteur (2), incluant :
une transmission comportant un arbre de poulie d'entraînement (62) et un arbre de poulie menée (64) ; et
un carter de vilebrequin (20) recevant un vilebrequin (40) et pouvant être séparé en deux parties le long d'un plan de séparation (S1) passant le long d'un axe (P1) du vilebrequin (40) ; et
un carter de transmission (30) recevant l'arbre de la poulie d'entraînement (62) et l'arbre de la poulie menée (64) ;
dans lequel le carter de transmission (30) inclut un support (33a, 33b) pour l'arbre de la poulie d'entraînement (62) et un support (34a, 34b) pour l'arbre de la poulie menée (64) ;
une desdites parties du carter de vilebrequin (20a) étant accouplée à une section du carter de transmission (30) ; et
l'autre desdites parties du carter de vilebrequin (20b) étant accouplée à une autre section du carter de transmission (30) ;
**caractérisé en ce que** :
chaque partie, ladite une partie (20a) et ladite autre partie (20b) du carter de vilebrequin (20), est fixée respectivement sur ladite une section et à ladite autre section du carter de transmission (30) par un élément de fixation respectif (91).

2. Moteur selon la revendication 1,
dans lequel ladite une partie (22c) du carter de vilebrequin (20a) et ladite une section (33b) du carter de transmission (30b) sont formées pour prendre des formes correspondant l'une à l'autre, l'une d'elles (33b) étant ainsi ajustée dans l'autre (22c) ;
ladite autre partie (29b) du carter de vilebrequin (20b) et ladite autre section (37c) du carter de transmission (30b) ont des formes correspondant l'une à l'autre, l'une d'elles (29d) étant ainsi ajustée dans l'autre (37c).

3. Moteur selon la revendication 2, comprenant en outre des premier et deuxième arbres (100, 101), dans chacun desquels une extrémité est supportée par le carter de vilebrequin (20), l'autre extrémité étant supportée par le carter de transmission (30) ;
dans lequel le premier arbre (100) est inséré dans ladite une partie (22c) du carter de vilebrequin (20a) et ladite une section (33b) du carter de transmission (30b) ; et
le deuxième arbre (101) est inséré dans ladite autre partie (29d) du carter de vilebrequin (20b) et ladite autre section (37c) du carter de transmission (30b).

4. Moteur selon les revendications 1, 2 ou 3, comprenant en outre : un premier arbre du côté du carter de vilebrequin (53) supporté de manière pivotante par ladite une partie (20a) du carter de vilebrequin (20) ;
un deuxième arbre du côté du boîtier de vilebrequin (85) supporté de manière pivotante par ladite autre partie (20b) du carter de vilebrequin (20) ;
un premier arbre du côté du carter de transmission (62) supporté par ladite une section (30b) du carter de transmission (30) ; et
un deuxième arbre du côté de la transmission (81) supporté par ladite autre section du carter de transmission (30) ;
dans lequel le premier arbre du côté du carter de vilebrequin (53) et le premier arbre du côté de la transmission (62) sont accouplés de manière coaxiale l'un à l'autre ; et
le deuxième arbre du côté du carter de vilebrequin (85) et le deuxième arbre du côté de la transmission (81) sont accouplés de manière coaxiale l'un à l'autre.

5. Moteur selon l'une quelconque des revendications 1 à 4,
comportant un arbre ou plusieurs arbres (64, 70) à l'extérieur du carter de vilebrequin (20), dans lequel l'arbre ou les arbres (64, 70) assurent l'accouplement d'un dispositif de transmission (8), pour transmettre la force d'entraînement à une roue arrière (4) d'un véhicule du type à enfourcher (1) incluant le moteur (2), à la poulie menée (63).

6. Moteur selon l'une quelconque des revendications 1 à 4, comprenant un arbre (70) formé séparément de l'arbre de la poulie menée (64) pour accoupler un dispositif de transmission (8), pour transmettre la force d'entraînement à une roue arrière (4) d'un véhicule du type à enfourcher (1) incluant le moteur (2), à l'arbre de la poulie menée (64) ;
dans lequel l'arbre (70) formé séparément est installé sur l'arrière du carter de vilebrequin (20).

7. Moteur selon l'une quelconque des revendications 1 à 6,
dans lequel le carter de transmission (30) inclut un élément unitaire (30a, 30b) établissant le support (33a, 33b) pour l'arbre de la poulie d'entraînement (62) et le support (34a, 34b) pour l'arbre de la poulie menée (64), les parties du carter de vilebrequin (20a, 20b) étant combinées avec des sections de l'élément (30a, 30b).

8. Moteur selon l'une quelconque des revendications 1 à 7, dans lequel lesdites au moins deux parties (20a, 20b) du carter de vilebrequin sont combinées avec un élément commun (30b) du carter de transmission (30).

9. Véhicule du type à enfourcher (1), comprenant le moteur (2) selon l'une quelconque des revendications 1 à 8.
